# EUROPEAN PATENT APPLICATION

(11) **EP 4 576 510 A1**
(43) Date of publication of application: **25.06.2025**
(21) Application number: 23858834.7
(22) Date of filing: 21.06.2023
(51) Int. Cl.: H02K 3/50, H02K 5/08, H02K 5/22, H02K 11/25, H02K 7/10

(54) **MOTOR, POWER ASSEMBLY, AND VEHICLE**

(30) Priority: 02.09.2022 CN 202211070145
(71) Applicant: Huawei Digital Power Technologies Co., Ltd., Shenzhen, Guangdong 518043 (CN)
(72) Inventor: ZHENG, Yang, Shenzhen, Guangdong 518043 (CN); ZHOU, Zhao, Shenzhen, Guangdong 518043 (CN); LI, Hongbin, Shenzhen, Guangdong 518043 (CN); YAN, Keyu, Shenzhen, Guangdong 518043 (CN)
(74) Representative: Gill Jennings & Every LLP
(86) International application number: PCT/CN2023/101966
(87) International publication number: WO 2024/045795

(57) **Abstract**

Embodiments of this application provide a motor, a powertrain, and a vehicle. The motor includes a stator core and a winding structure wound around the stator core, and further includes a first injection molding structure. The first injection molding structure includes a first injection molding part and a plurality of first busbars, and the first busbar includes a first main body part and a first electrical connector. The first electrical connector of each first busbar is correspondingly connected to a first lead-out end of each phase of the winding structure. The first injection molding part wraps the first main body part of the first busbar, to fasten the first busbar. An insulation cover is disposed on the first injection molding structure, the insulation cover covers the exposed first electrical connector and the exposed first lead-out end, and an electrical clearance and a creepage distance between the first electrical connector and the first lead-out end, and a motor end cover and a housing are increased. This improves insulation safety of the motor and facilitates a miniaturization design of the motor.

## Description

### CROSS-REFERENCE TO RELATED APPLICATIONS

This application claims priority to Chinese Patent Application No. 202211070145.X, filed with the China National Intellectual Property Administration on September 2, 2022 and entitled "MOTOR, POWERTRAIN, AND VEHICLE", which is incorporated herein by reference in its entirety.

### TECHNICAL FIELD

This application relates to the field of motor technologies, and in particular, to a motor, a powertrain, and a vehicle.

### BACKGROUND

In recent years, flat wire motors are increasingly used in the field of new energy vehicles. The flat wire motor has a high copper slot fill factor, facilitates heat dissipation of a winding of the motor, can improve a voltage resistance capability of the winding, and reduces a length of an end portion of the winding. This can increase torque density and power density of the motor. Therefore, the flat wire motor has a good application prospect in new energy electric vehicles.

The motor includes a stator. The stator includes a stator core and a winding structure wound around the stator core. The winding structure may be a multiphase winding structure. A three-phase motor is used as an example. The winding structure may include a U-phase winding structure, a V-phase winding structure, and a W-phase winding structure. Lead-out ends of a three-phase winding structure may be respectively connected to lead-out copper bars, for example, respectively corresponding to a U-phase lead-out copper bar, a V-phase lead-out copper bar, and a W-phase lead-out copper bar. A solder joint and a solder surface are respectively disposed at two ends of the lead-out copper bar. The lead-out copper bar is connected to the winding structure through the solder joint, and is connected to a terminal through the solder surface, to implement connection to a control component or the like of a powertrain of a vehicle through the terminal. To strengthen insulation and fasten the lead-out copper bars, the U-phase lead-out copper bar, the V-phase lead-out copper bar, and the W-phase lead-out copper bar may be spaced from each other and form an overall structure through injection molding of an injection molding part. The solder joint and the solder surface are exposed outside the injection molding part for connection.

However, exposure of the solder joint reduces insulation safety of the motor. To meet an insulation safety distance requirement of the motor, a distance between the solder joint and a shell of the motor is large. This results in a large volume of the motor.

### SUMMARY

This application provides a motor, a powertrain, and a vehicle. The motor has high insulation safety, and a volume of the motor is effectively reduced when an insulation safety distance is met. This facilitates miniaturization of the motor.

A first aspect of this application provides a motor, including a stator core and a multiphase winding structure wound around the stator core. Each phase of the winding structure includes a first lead-out end, and the first lead-out end of each phase of the winding structure is connected to a lead-out wire of a same phase of the winding structure.

The motor further includes a first injection molding structure. The first injection molding structure includes a first injection molding part and a plurality of first busbars. Each first busbar includes a first main body part and a first electrical connector. The first injection molding part wraps first main body parts of the plurality of first busbars, to fasten the plurality of first busbars. The plurality of first busbars are spaced from each other in a circumferential direction of the winding structure, and the first electrical connector of each first busbar is electrically connected to the first lead-out end of each phase of the winding structure correspondingly. Therefore, electrical connection between the winding structure and a control unit of a powertrain or the like may be implemented by using the first busbar, to control power-on and the like of the motor. The first injection molding part can fasten the first busbar, improve disposition stability of the first busbar, reduce or avoid movement of the first busbar caused by vibration of the motor during assembly, operation, or the like, ensure performance of the motor, and help maintain a stable insulation distance between the first busbars.

In addition, the first injection molding part wraps a plurality of first main body parts of the first busbars that are spaced from each other, and the insulating first injection molding part is filled between first main body parts of two adjacent first busbars that are correspondingly connected to different phases of the winding structure. This can enhance insulation effect between the adjacent first busbars, improve insulation safety of the first busbars, and meet an insulation safety distance requirement of a high-voltage motor.

The motor further includes an insulation cover. The insulation cover is disposed on the first injection molding structure. The insulation cover covers the first electrical connector and the first lead-out end. For example, the insulation cover may completely cover a side that is of the first electrical connector and the first lead-out end and that is away from the stator core. The first electrical connector and the first lead-out end are not exposed on an end surface of the stator in the axial direction. In this way, in the motor, the insulation cover is disposed between the end cover and each of the first electrical connector and the first lead-out end. The insulation cover may function as a barrier to increase an electrical clearance and a creepage distance between the end cover and each of the first electrical connector and the first lead-out end. This effectively improves insulation safety between the first electrical connector, the first lead-out end, and the end cover, and can better meet the insulation safety distance requirement of the high-voltage motor. In addition, this helps reduce a length of an insulation distance between the end cover and each of the first electrical connector and the first lead-out end, reduce end space of the motor in the axial direction, reduce a size of the motor in the axial direction, and facilitate a miniaturization design of the motor.

The insulation cover may alternatively completely cover a side that is of the first electrical connector and the first lead-out end and that is away from an axis of the stator core. The first electrical connector is not exposed on an outer circumferential surface of the stator. In this way, in the motor, the insulation cover that can function as the barrier is disposed between the housing and each of the first electrical connector and the first lead-out end. This increases an electrical clearance and a creepage distance between the housing and each of the first electrical connector and the first lead-out end, and effectively improves insulation safety of the motor. In addition, this helps reduce a length of an insulation distance between the housing and each of the first electrical connector and the first lead-out end, reduce a size of the motor in the circumferential direction, and further facilitate a miniaturization design of the motor.

In a possible implementation, each phase of the winding structure further includes a second lead-out end, and the second lead-out end of each phase of the winding structure is connected to a neutral wire of a same phase of the winding structure.

The motor further includes a second busbar. The second busbar includes a plurality of connection end portions. The plurality of connection end portions are spaced from each other in the circumferential direction of the winding structure, and a second electrical connector is disposed on each connection end portion. The second electrical connector on each connection end portion is correspondingly connected to the second lead-out end of each phase of the winding structure. In this way, electrical connection of neutral points of the multiphase winding structure can be implemented by using the second busbar.

The insulation cover covers the second electrical connector and the second lead-out end. For example, the insulation cover may completely cover a side that is of the second electrical connector and the second lead-out end and that is away from the stator core. The second electrical connector and the second lead-out end are not exposed on the end surface of the stator in the axial direction. The insulation cover is also disposed between the end cover and each of the second electrical connector and the second lead-out end, to function as a barrier and increase an electrical clearance and a creepage distance between the end cover and each of the second electrical connector and the second lead-out end. This further improves insulation safety of the motor, further reduces the end space of the motor in the axial direction under the high insulation safety distance requirement of the high-voltage motor, and implements the miniaturization design of the motor.

The insulation cover may alternatively completely cover a side that is of the second electrical connector and the second lead-out end and that is away from the axis of the stator core. The second electrical connector and the second lead-out end are not exposed on the outer circumferential surface of the stator. The insulation cover that can function as the barrier is disposed between the housing and each of the second electrical connector and the second lead-out end. This improves insulation safety between the second electrical connector, the second lead-out end, and the housing, and further improves insulation safety of the motor. This can further reduce the size of the motor in the circumferential direction under the high insulation safety distance requirement of the high-voltage motor, and implements the miniaturization design of the motor more conveniently.

In a possible implementation, the insulation cover includes a top plate and a side plate. The top plate is located on a side that is of the first injection molding structure and that is away from the stator core, and the side plate is located on a side that is of the first injection molding structure and that is away from the axis of the stator core. The side plate is connected to the top plate, and the side plate and the top plate enclose accommodation space. The first electrical connector, the first lead-out end, the second electrical connector, and the second lead-out end are located in the accommodation space. The insulation cover has a good insulation function, so that the motor has better insulation safety, and the miniaturization design of the motor is facilitated.

In a possible implementation, one end of the multiphase winding structure in the axial direction is a connecting end, and the first lead-out end and the second lead-out end are located on an outer side of the connecting end in the axial direction.

The first injection molding structure is located on the outer side of the connecting end in the axial direction, and the second busbar is located on an outer circumferential side of the connecting end. The first electrical connector, the first lead-out end, the second electrical connector, and the second lead-out end are distributed in the circumferential direction. The second lead-out end of each phase of the winding structure and a second electrical connector correspondingly connected to the second lead-out end are disposed adjacent to a first lead-out end of the phase of the winding structure and a first electrical connector correspondingly connected to the first lead-out end. This helps ensure insulation safety of the motor.

In a possible implementation, a surface that is of the top plate and that faces the first injection molding part is provided with a plurality of isolation grooves. A first lead-out end and a second lead-out end of a same phase of the winding structure, and a first electrical connector and a second electrical connector that are correspondingly connected to the first lead-out end and the second lead-out end respectively are located in one isolation groove. In other words, a first lead-out end and a second lead-out end that are of different phases of the winding structure, and correspondingly connected first electrical connector and second electrical connector are located in different isolation grooves. This increases electrical clearances and creepage distances between the different phases of the winding and between the first electrical connector and the second electrical connector that are correspondingly connected to the different phases of the winding structure, and further improves insulation safety of the motor.

In a possible implementation, a baffle is disposed in the isolation groove, and the baffle divides the isolation groove into a first partition groove and a second partition groove. The first lead-out end and the first electrical connector are located in the first partition groove, and the second lead-out end and the second electrical connector are located in the second partition groove. The baffle may isolate and insulate the first lead-out end and the first electrical connector connected to the first lead-out end from the second lead-out end and the second electrical connector connected to the second lead-out end in the same phase of the winding structure. This increases an electrical clearance and a creepage distance between the first lead-out end and the first electrical connector, and the second lead-out end and the second electrical connector in the same phase of the winding structure, and further improves insulation safety of the motor.

In a possible implementation, the insulation cover further includes end plates, the end plates are located on two sides of the top plate and the side plate in the circumferential direction, and the end plate is separately connected to the top plate and the side plate. On one hand, strength of the insulation cover can be increased, and insulation stability of the insulation cover can be ensured. On the other hand, the end plates shield two sides of the first injection molding structure in the circumferential direction, to further seal the accommodation space. This helps further increase a creepage distance between the first electrical connector and the second electrical connector, and another metal mechanical part in the motor, and helps improve insulation safety of the motor.

In a possible implementation, the top plate is detachably connected to the first injection molding part, to facilitate removal and installation of the insulation cover, simplify an assembly process, and improve installation efficiency.

In a possible implementation, a first clamping structure is disposed on the top plate, a second clamping structure is disposed on the first injection molding part, and the top plate is connected to the first injection molding part through matching between the first clamping structure and the second clamping structure, that is, the insulation cover is connected to the first injection molding structure through clamping and matching, to facilitate installation and disassembly, and achieve high production implementability.

In a possible implementation, a protruding first clamping wall and a protruding second clamping wall are disposed on the surface that is of the top plate and that faces the first injection molding part, and there is an avoidance gap between the first clamping wall and the second clamping wall. Protrusions are disposed on two opposite side surfaces of the first clamping wall and the second clamping wall to form the first clamping structure. A protruding clamping part is disposed on an outer circumferential side of the first injection molding part, and two opposite side surfaces of the clamping part are provided with grooves to form the second clamping structure. The first clamping wall and the second clamping wall can deform to some extent under external force, so that the first clamping structure on the first clamping wall and the second clamping wall can be clamped to and matched with the second clamping structure on the clamping part. This facilitates disassembly or assembly, and helps further improve assembly efficiency.

In a possible implementation, the first clamping structure is separately located at an end that is of the first clamping wall and that is away from the top plate, and an end that is of the second clamping wall and that is away from the top plate. The second clamping structure is located at one end that is of the clamping part and that is away from the top plate, and the clamping part is in the avoidance gap. This helps enhance clamping strength of the first clamping structure and the second clamping structure, enhance assembly fastness of the first injection molding part and the insulation cover, and ensure insulation stability.

In a possible implementation, guide slopes are also disposed on the two opposite side surfaces of the clamping part. The guide slope is located on a side that is of the second clamping structure and that is away from the stator core, and the two guide slopes tilt in directions opposite to each other from an end that is of the clamping part and that faces the top plate to the end that is of the clamping part and that is away from the top plate. The two guide slopes may be in a splayed structure. The guide slope is located on the side that is of the second clamping structure and that is away from the stator core, so that the first clamping structure of the insulation cover is clamped to and matched with the second clamping structure after passing the guide slope. The guide slope plays a good guiding role and facilitates assembly.

In a possible implementation, a first positioning structure is further disposed on the top plate, and a second positioning structure matched with the first positioning structure is disposed on the first injection molding part. Positioning and matching between the first positioning structure and the second positioning structure plays a positioning role, to facilitate accurate assembly between the insulation cover and the first injection molding structure. This improves assembly efficiency.

In a possible implementation, the insulation cover further includes a reinforcing member, and the reinforcing member is separately connected to the top plate and the side plate, to increase strength of the insulation cover and ensure insulation and stability of the insulation cover.

In a possible implementation, the motor further includes a second injection molding structure, and the second injection molding structure includes a temperature sensor, a second injection molding part, and a second busbar. The second busbar further includes a second main body part, and the plurality of connection end portions are disposed on the second main body part. The temperature sensor is attached to a surface of the second main body part, and heat generated when the stator and the winding structure operate may be transferred to the second busbar and the temperature sensor, to detect a temperature of the stator.

The second injection molding part wraps the temperature sensor and the second main body part. The second injection molding part can isolate and protect the temperature sensor, and can effectively prevent cooling liquid from directly contacting the temperature sensor. This reduces impact of the cooling liquid on the temperature sensor, reduces a feedback delay of the temperature sensor, and improves detection accuracy of the temperature sensor. Effect of a low delay and high precision is implemented under a condition of detecting the temperature of the stator.

In a possible implementation, the second busbar includes a thermally conductive member. The thermally conductive member is disposed on a surface of the second main body part, and the thermally conductive member and the surface of the second main body part enclose an accommodation cavity. The temperature sensor is located in the accommodation cavity, and the temperature sensor is attached to at least one surface of the thermally conductive member. On one hand, the thermally conductive member can accommodate and fasten the temperature sensor, so that the temperature sensor is fastened to the second busbar. On the other hand, the temperature sensor is attached to the at least one surface of the thermally conductive member, and heat of the second busbar may also be transferred to the temperature sensor through the thermally conductive member. This increases an area of heat transfer between the temperature sensor and the second busbar, further reduces a feedback delay of temperature detection, and improves detection accuracy.

In a possible implementation, the thermally conductive member includes a bottom surface and a side surface that are connected. The bottom surface is connected to the second main body part, and the side surface is opposite to the second main body part. The bottom surface, the side surface, and the surface of the second main body part jointly enclose the accommodation cavity. The temperature sensor is separately attached to the bottom surface and the side surface, so that the temperature sensor can be better attached to the thermally conductive member, and a thermal contact area is large, to implement a low feedback delay and high detection accuracy.

In a possible implementation, the accommodation cavity includes a first cavity opening. The first cavity opening is formed between the second main body part and an end that is of the side surface and that is away from the bottom surface. The temperature sensor is inserted and disposed in the accommodation cavity through the first cavity opening. In this way, the temperature sensor may be disposed in the accommodation cavity through insertion, to facilitate assembly or disassembly.

In a possible implementation, the thermally conductive member includes a bottom surface, a side surface, and a top surface that are sequentially connected. The bottom surface is connected to the second main body part, the side surface is opposite to the second main body part, and an end that is of the top surface and that is away from the side surface extends towards the second main body part. The bottom surface, the side surface, the top surface, and the surface of the second main body part jointly enclose the accommodation cavity. The temperature sensor is separately attached to the bottom surface, the side surface, and the top surface, to further increase a contact surface between the temperature sensor and the thermally conductive member. This further reduces a feedback delay of temperature detection, and improves detection accuracy.

In a possible implementation, a first cavity opening and a second cavity opening that are opposite to each other are disposed in the accommodation cavity. The temperature sensor is inserted and disposed in the accommodation cavity through the first cavity opening, to implement insertion and assembly of the temperature sensor, and facilitate assembly or disassembly.

In a possible implementation, a spring structure is further disposed on the thermally conductive member. The spring structure includes a fastening end and an elastic end. The fastening end is connected to the thermally conductive member, and the elastic end is located on a side of the fastening end in an insertion direction of the temperature sensor. A first end of the elastic end is connected to the fastening end, and a second end of the elastic end extends into the accommodation cavity. An insertion slot configured to be matched with the spring structure is disposed on the temperature sensor, and the elastic end is inserted into the insertion slot. Insertion of the temperature sensor from the first cavity opening presses the elastic end, and insertion of the temperature sensor can be implemented. The temperature sensor is inserted into the accommodation cavity, and the elastic end may be inserted into the insertion slot. The temperature sensor is fastened through matching between the elastic end and the insertion slot. In addition, rebound force of the elastic end may also act on the temperature sensor to press the temperature sensor, so that the temperature sensor can be better attached to the first main body part.

In a possible implementation, the first injection molding structure further includes a temperature sensor. The temperature sensor is attached to a surface of the first main body part, and the first injection molding part wraps the temperature sensor and the first main body part. The first injection molding part can also isolate and protect the temperature sensor, reduce impact of the cooling liquid on the temperature sensor, and implement a low delay and high precision of temperature detection under the condition of detecting the temperature of the stator.

In a possible implementation, the motor further includes a third injection molding structure. The third injection molding structure includes a temperature sensor, a third injection molding part, and the first lead-out end. The temperature sensor is attached to a surface of the first lead-out end, and the third injection molding part wraps the temperature sensor and a part of the first lead-out end. The third injection molding part can also protect the temperature sensor. Effect of a low delay and high precision is implemented under the condition of detecting the temperature of the stator.

In a possible implementation, the first busbar further includes a first end portion and a second end portion. The first electrical connector is disposed on the first end portion, and electrical connection surface is disposed on the second end portion.

The motor further includes a plurality of terminals. Each terminal includes a first connection part, a second connection part, and a bendable body part. The first connection part and the second connection part are located at two ends of the body part. The first connection part is electrically connected to the electrical connection surface, to implement connection between the winding structure and the terminal, so that the winding structure can be electrically connected to the control unit or the like through the terminal.

The bendable body part may implement avoidance during assembly. For example, when a structure like the end cover and an oil injection ring is assembled, the body part may be bent to be in a vertical state (parallel to an axial direction of the stator core) to implement avoidance. This facilitates assembly of the end cover and the like. After the assembly is completed, the body part may be bent to form a bending structure, to implement connection to the first busbar and the control unit.

In a possible implementation, an extension direction of the first connection part is parallel to the axial direction of the stator core, to facilitate electrical connection between the first connection part and the first junction. An extension direction of the second connection part is parallel to a radial direction of the winding structure, to facilitate electrical connection between the second connection part and the control unit or the like.

The body part forms the bending structure. In the axial direction of the stator core, a height from one end that is of the bending structure and that is away from the stator core to the stator core is higher than a height from the second connection part to the stator core, so that the bending structure has large bending and adjustment space. In this way, the second connection part has large adjustment flexibility. This facilitates alignment between the second connection part and the control unit to implement electrical connection, and can reduce difficulty in assembling the terminal and the control unit.

In a possible implementation, the stator core is provided with a plurality of stator grooves. The plurality of stator grooves are spaced from each other in a circumferential direction of the stator core. The winding structure is wound around the stator grooves, and an insulation part is disposed between the winding structure and an inner wall of the stator groove. The insulation part can insulate and isolate the winding structure from the stator core, to ensure insulation safety of the motor.

In a possible implementation, the insulation part is disposed around a side wall of the stator groove, and a head end and a tail end of the insulation part in an encircling direction at least partially overlap to form a lap structure. This helps increase an electrical clearance and a creepage distance between the winding structure and the stator core, and improve insulation safety of the motor.

The stator groove has expansion space to accommodate the lap structure. In other words, the expansion space is specifically added in the stator groove to accommodate the lap structure, so that the lap structure with a large size and thickness can be accommodated. In this way, an overlapping area between the head end and the tail end of the insulation part is increased, and insulation safety of the motor can be further improved, to meet an insulation safety requirement of the high-voltage motor.

A second aspect of this application provides a powertrain, including a deceleration mechanism and any one of the foregoing motors, where the motor is connected to the deceleration mechanism.

A third aspect of this application provides a vehicle, including a vehicle body and any one of the foregoing motors, where the motor is disposed on the vehicle body.

### BRIEF DESCRIPTION OF DRAWINGS

FIG. 1 is a diagram of a structure of a stator in a motor according to an embodiment of this application;
FIG. 2 is a diagram of assembly of a stator core and a winding structure in a motor according to an embodiment of this application;
FIG. 3 is an enlarged view of a partial structure of a part B in FIG. 2;
FIG. 4 is a diagram of a structure of a first busbar in a motor according to an embodiment of this application;
FIG. 5 is a diagram of assembly of a first injection molding structure in a motor according to an embodiment of this application;
FIG. 6 is a diagram of assembly of a stator core, a winding structure, and a first injection molding structure in a motor according to an embodiment of this application;
FIG. 7 is a diagram of a top-view structure of a stator in a motor according to an embodiment of this application;
FIG. 8 is an enlarged view of a partial structure of a part A in FIG. 1;
FIG. 9 is a diagram of partial splitting of a stator core, a first injection molding structure, and an insulation cover in a motor according to an embodiment of this application;
FIG. 10 is a diagram of assembly of a stator core, a first injection molding structure, and an insulation cover in a motor according to an embodiment of this application;
FIG. 11 is a diagram of a structure of assembly of a first injection molding structure, an insulation cover, and a terminal in a motor according to an embodiment of this application;
FIG. 12 is a diagram of a structure of another terminal in a motor according to an embodiment of this application;
FIG. 13 is a diagram of a side-view structure of a terminal in a motor according to an embodiment of this application;
FIG. 14 is a diagram of a split structure of a stator core, a first injection molding structure, and an insulation cover in a motor according to an embodiment of this application;
FIG. 15 is a diagram of a partial cross-sectional structure of a stator in a motor according to an embodiment of this application;
FIG. 16 is a diagram of a structure of a rear side of an insulation cover in a motor according to an embodiment of this application;
FIG. 17 is another diagram of a first injection molding structure in a motor according to an embodiment of this application;
FIG. 18 is a diagram of a partial cross-sectional structure of clamping and matching between a first injection molding part and an insulation cover in a motor according to an embodiment of this application;
FIG. 19 is a diagram of a structure of a front side of an insulation cover in a motor according to an embodiment of this application;
FIG. 20 is still another diagram of a structure of a first injection molding structure in a motor according to an embodiment of this application;
FIG. 21 is a diagram of a partial side-view structure of a stator in a motor according to an embodiment of this application;
FIG. 22 is a diagram of a structure of assembly of a second busbar and a temperature sensor in a motor according to an embodiment of this application;
FIG. 23 is a diagram of a second injection molding structure in a motor according to an embodiment of this application;
FIG. 24 is an enlarged view of a partial structure of assembly of a second busbar and a temperature sensor in a motor according to an embodiment of this application;
FIG. 25 is a diagram of a structure of a thermally conductive member on a second busbar in a motor according to an embodiment of this application;
FIG. 26 is a diagram of a structure of a temperature sensor in a motor according to an embodiment of this application;
FIG. 27 is a diagram of a partial cross-sectional structure of assembly of a second busbar and a temperature sensor in a motor according to an embodiment of this application;
FIG. 28 is a diagram of a partial cross-sectional structure of the motor in FIG. 24 along a surface A-A;
FIG. 29 is a diagram of a partial structure of a second busbar in a motor according to an embodiment of this application;
FIG. 30 is a diagram of another structure of a second busbar in a motor according to an embodiment of this application;
FIG. 31 is a diagram of another structure of assembly of a second busbar and a temperature sensor according to an embodiment of this application;
FIG. 32 is a diagram of a cross-sectional structure of the motor in FIG. 30 along a surface B-B;
FIG. 33 is a diagram of another structure of a temperature sensor in a motor according to an embodiment of this application;
FIG. 34 is a diagram of still another structure of a second busbar in a motor according to an embodiment of this application;
FIG. 35 is a diagram of a cross-sectional structure of the motor in FIG. 34 along a surface C-C;
FIG. 36 is a diagram of another structure of a thermally conductive member in a motor according to an embodiment of this application;
FIG. 37 is a diagram of yet another structure of a second busbar in a motor according to an embodiment of this application;
FIG. 38 is a diagram of still yet another structure of a second busbar in a motor according to an embodiment of this application;
FIG. 39 is an enlarged view of a partial structure of a part C in FIG. 10;
FIG. 40a is a cross-sectional diagram of assembly of a stator groove and an insulation part in a motor according to an embodiment of this application;
FIG. 40b is a cross-sectional diagram of a stator groove in a motor according to an embodiment of this application;
FIG. 40c is another cross-sectional diagram of assembly of a stator groove and an insulation part in a motor according to an embodiment of this application;
FIG. 40d is a cross-sectional diagram of a stator groove in a motor according to an embodiment of this application;
FIG. 40e is still another cross-sectional diagram of an insulation part in a stator groove in a motor according to an embodiment of this application; and
FIG. 40f is yet another cross-sectional diagram of assembly of a stator groove and an insulation part in a motor according to an embodiment of this application.

### Descriptions of reference numerals:

100: stator;
   10: stator core;
      11: stator groove; 11a: expansion space; 111: groove opening; 112: groove bottom;
   20: winding structure; 20a: connecting end;
      21a, 21b, and 21c: first lead-out ends;
      22a, 22b, and 22c: second lead-out ends;
   30: first injection molding structure;
      31: first injection molding part; 311: clamping part; 3111: second clamping structure; 3112a and 3112b: guide slopes; 312: second positioning structure;
      32a, 32b, and 32c: first busbars; 321: first main body part; 322: first end portion; 3221: first electrical connector; 323: second end portion; 3231: electrical connection surface;
   40: insulation cover; 40a: accommodation space;
      41: top plate; 411: isolation groove; 412: baffle; 4111: first partition groove; 4112: second partition groove; 413: first clamping wall; 414: second clamping wall; 415: first clamping structure; 416: first positioning structure;
      42: side plate; 43: end plate; 44: reinforcing member;
   50: second injection molding structure;
      51: second injection molding part;
      52: temperature sensor; 521: detection body; 522: lead; 523: insertion slot;
      53: second busbar; 531: second main body part; 532a, 532b, and 532c: connection end portions; 5321: second electrical connector; 533: thermally conductive member; 533a: bottom surface; 533b: side surface; 533c: top surface; 5331: first limiting structure; 5332: first guide structure; 5333: second limiting structure; 5334: third limiting structure; 5335: fourth limiting structure; 5336: second guide structure; 5337: third guide structure; 5338: spring structure; 5338a: fastening end; 5338b: elastic end; 5338c: extension end; 534: accommodation cavity; 534a: first cavity opening; 534b: second cavity opening;
   60a, 60b, and 60c: terminals;
      61: first connection part; 62: second connection part; 63: body part; 631: bending structure; 64: tube;
   70: insulation part; 70a: lap structure;
71: head end; and 72: tail end.

### DESCRIPTION OF EMBODIMENTS

Terms used in implementations of this application are only used to explain specific embodiments of this application, but are not intended to limit this application.

A motor is an electromagnetic apparatus that implements conversion or transfer of electrical energy according to the law of electromagnetic induction. A main function of the motor is to generate driving torque and act as a power source of electric appliances or various machines. The motor generally includes a round wire motor and a flat wire motor. The flat wire motor means that a stator winding is wound by a flat copper wire with a wide width, and the round wire motor means that a stator winding is wound by a round copper wire with a narrow width. The flat wire motor has advantages such as improving a copper slot fill factor of the motor, improving heat dissipation of the motor, and reducing space at an end of the winding. Therefore, the flat wire motor has become an important manner for increasing torque density and power density of the motor, and is applied to the field of new energy vehicles, to increase a vehicle endurance mileage, improve space utilization, and reduce powertrain costs.

With the pursuit of the vehicle endurance mileage, charging time, and the like, to increase a charging speed and motor power density, increasing vehicle drive systems use a high-voltage platform. In addition, a heating load of the motor during operation increases gradually, and heat dissipation of the motor is implemented through oil cooling. Therefore, a high-voltage oil cooling motor becomes an important development direction.

The motor mainly includes a shell. The shell includes a housing and end covers such as a front end cover and a rear end cover located at two ends of the housing. The front end cover, the rear end cover, and the housing jointly enclose a sealed cavity. A stator, a rotor, and a rotating shaft may be disposed in the cavity. One end of the rotating shaft may extend through the front-end cover to the outside of the cavity, to implement connection with an external structure like a deceleration mechanism, and the other end of the rotating shaft may be connected to the rear-end cover in a rotating manner. The rotor may be sleeved on the rotating shaft, and the stator may be sleeved on an outer circumference of the rotor. In other words, the front end cover and the rear end cover are respectively located on two sides of the stator in an axial direction, and the housing is disposed around a circumferential outer side of the stator. The rotor may include a rotor core and a winding structure wound around the rotor core. The stator may include a stator core and a winding structure wound around the stator core. In this way, an electromagnetic conversion function of the motor can be implemented.

It should be understood that the motor may further include another mechanical part, to improve an overall structure of the motor. For example, the motor may further include a cooling channel, an oil injection ring, and the like. A cooling liquid, for example, an oil coolant, may enter the cooling channel through the oil injection ring, to implement heat dissipation of the stator. For example, a cooling oil channel may be formed between the stator and the housing, and an oil inlet and an oil outlet are disposed at positions adjacent to the front end cover and the rear end cover at two ends of the cooling oil channel. Cooling oil may be sprayed from the oil inlet to ends of the stator and the winding structure thereof through the oil injection ring, and the cooling oil obtained through heat exchange may flow out from the oil outlet.

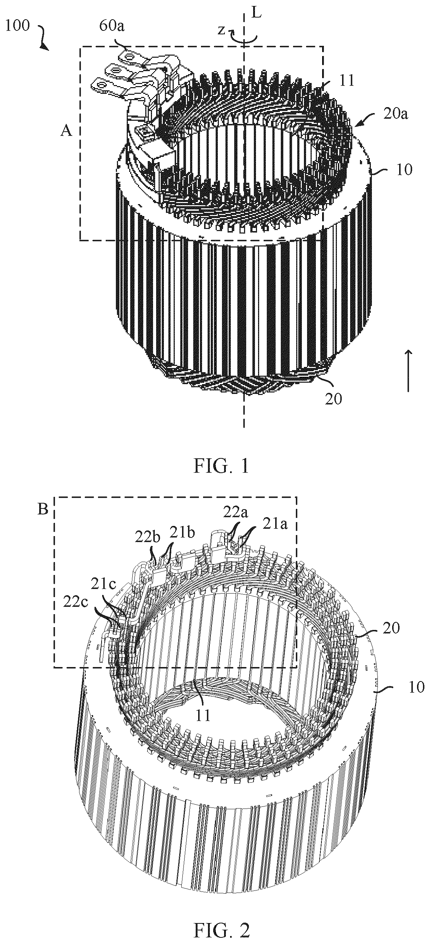

FIG. 1 is a diagram of a structure of a stator in a motor according to an embodiment of this application.

Refer to FIG. 1. The stator 100 includes a stator core 10. The stator core 10 may be of a hollow cylindrical structure, including a circumferential direction, an axial direction, and a radial direction. The axial direction, the circumferential direction, and the radial direction form three orthogonal directions of the cylindrical structure. The axial direction of the stator core 10 is a direction of a rotation center axis of the cylindrical stator core 10, and an axis of the stator core 10 is the rotation center axis, for example, an axis L in FIG. 1. The circumferential direction of the stator core 10 is a circumferential direction. The radial direction of the stator core 10 is perpendicular to the axial direction, and is a direction of a radius or diameter of an end face circle of the cylindrical stator core 10. Circumferential, radial and axial directions of the motor may be parallel to the circumferential, radial and axial directions of the stator core 10.

A winding structure 20 is wound around the stator core 10, the winding structure 20 is circumferentially distributed in the circumferential direction of the stator core 10, and the formed winding structure 20 is also of a hollow cylindrical structure. An axis of the winding structure 20 is the axis of the stator core 10, and an axial direction of the winding structure 20 is the axial direction of the stator core 10. A circumferential direction of the winding structure 20 is parallel to the circumferential direction of the stator core 10, and a radial direction of the winding structure 20 is parallel to the radial direction of the stator core 10.

Specifically, the stator core 10 is provided with a plurality of stator grooves 11, the plurality of stator grooves 11 may be spaced from each other in the circumferential direction of the stator core 10, and an extension direction of each stator groove 11 may be parallel to the axial direction of the stator core 10. The stator groove 11 may limit and fasten the winding structure 20, so that the winding structure 20 may be wound around the stator core 10 through the stator groove 11.

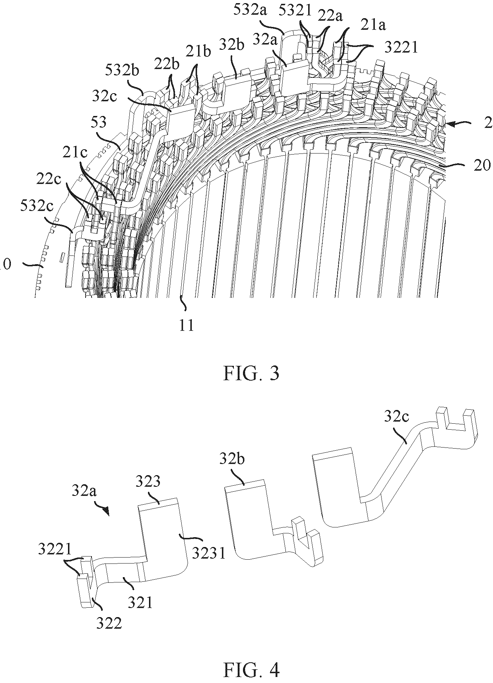

FIG. 2 is a diagram of assembly of the stator core and the winding structure in the motor according to an embodiment of this application. FIG. 3 is an enlarged view of a partial structure in FIG. 2.

The winding structure 20 may be a multiphase winding structure. For example, the winding structure 20 may be a three-phase winding structure, for example, may include a U-phase winding structure, a V-phase winding structure, and a W-phase winding structure. A lead-out wire is disposed at a winding end of each phase of the winding structure, and the lead-out wire may be connected to a first lead-out end as a lead-out end of the phase of the winding structure. As shown in FIG. 2 and FIG. 3, for example, the U-phase winding structure has a first lead-out end 21a, the V-phase winding structure has a first lead-out end 21b, and the W-phase winding structure has a first lead-out end 21c.

Certainly, in some other examples, a quantity of phases of the winding structure 20 may alternatively be another quantity, for example, five or six. In other words, the winding structure 20 may be a five-phase winding structure, a six-phase winding structure, or the like. For example, the winding structure 20 may be a six-phase winding, and may include a U-phase winding structure, a V-phase winding structure, a W-phase winding structure, an A-phase winding structure, a B-phase winding structure, and a C-phase winding structure.

It should be noted that each phase of the winding structure may include a plurality of parallel branches, each branch may include a plurality of flat coils, some of the coils are located in the stator groove 11, and some of the coils are located outside the stator groove 11. One end of the multiphase winding structure 20 in the axial direction is a connecting end 20a. The plurality of flat coils may be connected at the connecting end 20a through welding or the like to form the branch. Ends of the plurality of branches are the end of the winding structure, the lead-out wire is disposed on an end of each branch of each phase of the winding structure, and each lead-out wire is connected to the first lead-out end. For example, the U-phase winding structure includes two branches, and lead-out wires at ends of the two branches are respectively connected to first lead-out ends 21a.

The first lead-out end may be located on an outer side (a side away from the stator core 10) of the connecting end 20a of the winding structure 20 in the axial direction, so that the first lead-out end is electrically connected to an external mechanical part like a control unit in a powertrain, to control power-on and the like of the motor.

Still refer to FIG. 3. Each phase of the winding structure may further include a neutral wire. The neutral wire is a conducting wire led out from a neutral point of the winding structure. A second lead-out end may be connected to an end of the neutral wire, and is used as a lead-out end of the neutral point of the phase of the winding structure. For example, the U-phase winding structure includes a second lead-out end 22a, the V-phase winding structure includes a second lead-out end 22b, and the W-phase winding structure includes a second lead-out end 22c.

When each phase of the winding structure includes a plurality of parallel branches, each branch has a neutral wire, and the neutral wire is connected to the second lead-out end. As shown in FIG. 3, for example, the U-phase winding structure includes two branches, and neutral wires of the two branches are respectively connected to second lead-out ends 22a.

The second lead-out end may also be located on the outer side of the connecting end 20a of the multiphase winding structure 20 in the axial direction, to implement electrical connection between the second lead-out ends.

To implement electrical connection between the winding structure 20 and the external mechanical part like the control unit of the powertrain, the motor may further include a plurality of first busbars, and each first busbar is correspondingly connected to a first lead-out end of each phase of the winding structure. Refer to FIG. 3. The plurality of first busbars are a first busbar 32a, a first busbar 32b, and a first busbar 32c. The first busbar 32a, the first busbar 32b, and the first busbar 32c are located at the connecting end 20a of the winding structure 20, and may be disposed side by side in sequence in the circumferential direction of the winding structure 20. The first lead-out end 21a of the U-phase winding structure is correspondingly connected to the first busbar 32a, the first lead-out end 21b of the V-phase winding structure is correspondingly connected to the first busbar 32b, and the first lead-out end 21c of the W-phase winding structure is correspondingly connected to the first busbar 32c. Each busbar is further electrically connected to the control unit or the like, so that the winding structure 20 is electrically connected to the control unit or the like.

FIG. 4 is a diagram of a structure of the first busbar in the motor according to an embodiment of this application.

Specifically, a forming material of each first busbar may be a material with high conductivity. For example, the first busbar may be a copper bar. Each first busbar may include a first main body part, a first end portion, and a second end portion. Refer to FIG. 4. For example, the first busbar 32a includes a first main body part 321, a first end portion 322, and a second end portion 323. The first end portion 322 and the second end portion 323 may be respectively located at two ends of the first main body part 321.

A first electrical connector 3221 may be disposed on the first end portion 322. As shown in FIG. 3, the first busbar 32a may be electrically connected to the first lead-out end 21a of the U-phase winding structure via the first electrical connector 3221. For example, the first electrical connector 3221 may be a solder joint formed through protruding on the first end portion 322, and the first electrical connector 3221 may be electrically connected to the first lead-out end 21a through welding or the like.

There may be one or more first electrical connectors on one first end portion, and a quantity of the first electrical connectors may correspond to a quantity of the first lead-out ends of each phase of the winding structure. For example, the U-phase winding structure includes two branches, each branch is correspondingly connected to one first lead-out end, and two first electrical connectors 3221 may be disposed on the first end portion 322, to correspondingly connect to the first lead-out ends of the two branches respectively.

Electrical connection surface 3231 may be formed on the second end portion 323, and the electrical connection surface 3231 may be an end surface that is on one end of the second end portion 323 and that is parallel to the axial direction. The stator 100 may further include a terminal (for example, a terminal 60a in FIG. 1). One end of the terminal may be electrically connected to the electrical connection surface 3231 through welding or the like, and the other end of the terminal may be electrically connected to the control unit or the like, so that the second end portion 323 is electrically connected to the external mechanical part like the control unit through the terminal.

Still refer to FIG. 3. When the first busbar 32a, the first busbar 32b, and the first busbar 32c are respectively connected to the first lead-out end 21a of the U-phase winding structure, the first lead-out end 21b of the V-phase winding structure, and the first lead-out end 21c of the W-phase winding structure, the first busbar 32a, the first busbar 32b, and the first busbar 32c are suspended at the connecting end 20a of the winding structure 20, and stability is poor.

In addition, to ensure performance of the motor, a preset distance should be reserved between the first busbar 32a, the first busbar 32b, and the first busbar 32c, especially between the first busbar 32a and the first busbar 32b that are adjacent to each other and between the first busbar 32b and the first busbar 32c that are adjacent to each other. That is, there is a preset insulation distance between two adjacent first busbars correspondingly connected to different phases of the winding structure, so that an insulation distance is also reserved between first electrical connectors on the adjacent first busbars. Especially in a high-voltage motor, a high insulation requirement is imposed on adjacent first busbars connected to different phases of the winding structure and first electrical connectors, and a long insulation distance needs to be ensured.

Correspondingly, to implement connection of neutral wires between a plurality of phases of windings, as shown in FIG. 3, the stator 100 may further include a second busbar 53. The second busbar 53 is located on the connecting end 20a. Specifically, the second busbar 53 may be located on an outer circumferential side of the connecting end 20a.

The second busbar 53 may include a plurality of spaced connection end portions, the plurality of connection end portions may be successively disposed in the circumferential direction of the winding structure 20, and each connection end portion is correspondingly connected to the second lead-out end of each phase of the winding structure. As shown in FIG. 3, the plurality of connection end portions are a connection end portion 532a, a connection end portion 532b, and a connection end portion 532c. The second lead-out end 22a of the U-phase winding structure is correspondingly connected to the connection end portion 532a, the second lead-out end 22b of the V-phase winding structure is correspondingly connected to the connection end portion 532b, and the second lead-out end 22c of the W-phase winding structure is correspondingly connected to the connection end portion 532c.

Specifically, a second electrical connector may be disposed on a connection end portion of each second busbar, and the connection end portion is electrically connected to the second lead-out end via the second electrical connector. Still refer to FIG. 3. The connection end portion 532a is used as an example. A second electrical connector 5321 is disposed on the connection end portion 532a, and the connection end portion 532a is electrically connected to the second lead-out end 22a via the second electrical connector 5321. For example, the second electrical connector 5321 may be a solder joint formed through protruding on the connection end portion 532a, and the second electrical connector 5321 may be electrically connected to the second lead-out end 22a through welding or the like.

There may alternatively be one or more second electrical connectors on one connection end portion, and a quantity of the second electrical connectors may correspond to a quantity of second lead-out ends of each phase of the winding structure. For example, the U-phase winding structure 20 includes two branches, each branch is correspondingly connected to one second lead-out end, and two second electrical connectors 5321 may be disposed on the connection end portion 532a, to correspondingly connect to the second lead-out ends of the two branches respectively.

It should be understood that a preset insulation distance should also be reserved between the second busbar and each of the plurality of first busbars, so that there is also an insulation safety distance between the first electrical connector and the second electrical connector, to ensure performance of the motor.

In a related technology, an insulation safety distance is implemented by using adhesive powder. For example, the first busbar, the second busbar, and the connecting end of the winding structure are heated, and the first busbar, the second busbar, and the connecting end of the winding structure are put into insulation powder, so that a welding part between coils, the first busbar, the second busbar, a connection part between the first electrical connector and the first lead-out end, a connection part between the second electrical connector and the second lead-out end, and the like are all wrapped with the insulation powder. An insulation layer is formed after cooling, and implements insulation protection.

However, this insulation protection manner has a complex process, and is inconvenient for mass production. Insulation safety performance is poor, and it is difficult to meet a high insulation safety requirement of a high-voltage motor. In addition, stability of the first busbar, the second busbar, and the like is poor.

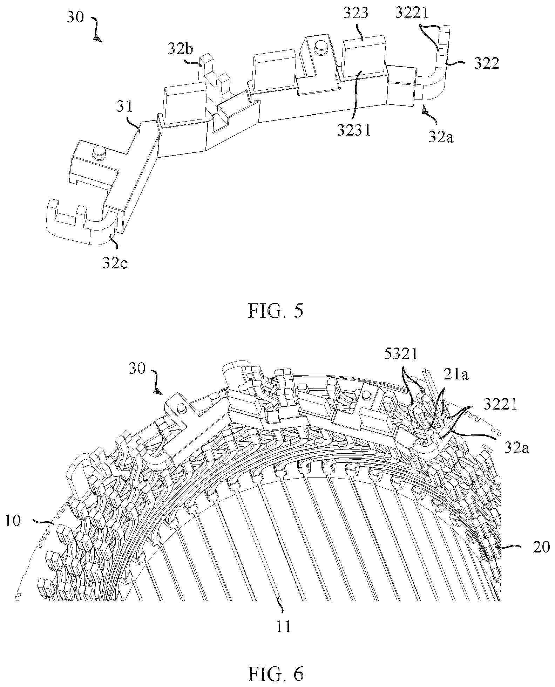

FIG. 5 is a diagram of assembly of a first injection molding structure in the motor according to an embodiment of this application.

In this embodiment of this application, to improve disposition stability of the first busbar and improve insulation safety, the stator 100 may further include the first injection molding structure 30. The first injection molding structure 30 is located at the connecting end 20a of the winding structure 20 (as shown in FIG. 6). As shown in FIG. 5, the first injection molding structure 30 may include a first injection molding part 31 and the foregoing plurality of first busbars (such as the first busbar 32a, the first busbar 32b, and the first busbar 32c).

Specifically, the first injection molding part 31 wraps first main body parts of the plurality of first busbars (as shown in FIG. 4), to fasten the plurality of first busbars. The plurality of first busbars are spaced from each other in the circumferential direction of the winding structure 20, to maintain an insulation safety distance. In this way, the first injection molding part 31 is also disposed in a gap between first main body parts of two adjacent first busbars, and the formed first injection molding structure 30 may also extend in the circumferential direction of the winding structure 20. This facilitates assembly and helps further reduce a size of the motor in the radial direction.

A forming material of the first injection molding part 31 may be a material with high insulation, for example, polypropylene, polyethylene, or polyvinyl chloride. During injection molding of the first injection molding part 31, the plurality of first busbars and the first injection molding part 31 may form the entire first injection molding structure 30 through injection molding.

The first injection molding part 31 can fasten the first busbar, improve disposition stability of the first busbar, reduce or avoid movement of the first busbar caused by vibration of the motor during assembly, operation, or the like, ensure performance of the motor, and help maintain a stable insulation distance between the first busbars.

In addition, the first injection molding part 31 wraps a plurality of first main body parts of the first busbars that are spaced from each other, and the insulating first injection molding part 31 is filled between first main body parts of two adjacent first busbars that are correspondingly connected to different phases of the winding structure. This can enhance insulation effect between the adjacent first busbars, improve insulation safety of the first busbars, and meet an insulation safety distance requirement of the high-voltage motor. This further helps reduce a length of an insulation distance between the first busbars, and helps reduce a size of the end portion of the stator 100 in the axial direction.

In addition, the first injection molding structure 30 may be formed through injection molding, and assembly on the winding structure 20 may be completed by directly connecting the first injection molding structure 30 to the first lead-out end. A structure and a forming process are simple, and production and implementation are facilitated. In addition, the plurality of first busbars form the entire first injection molding structure 30. This facilitates overall welding with the winding structure 20, and also helps simplify an assembly process of the stator 100.

It should be noted that the first end portion and the second end portion of the first busbar may be located outside the first injection molding part. As shown in FIG. 5, the first busbar 32a is used as an example. The first end portion 322 and the second end portion 323 are located outside the first injection molding part 31. In this way, the first electrical connector 3221 and the electrical connection surface 3231 are exposed, to implement electrical connection to the first lead-out end, the control unit, and the like respectively.

FIG. 6 is a diagram of assembly of the stator core, the winding structure, and the first injection molding structure in the motor according to an embodiment of this application.

The first injection molding structure 30 is assembled with the winding structure 20, so that the first electrical connectors of the plurality of first busbars are correspondingly connected to the first lead-out ends of phases of the winding structure 20. For example, as shown in FIG. 6, the first electrical connector 3221 of the first busbar 32a is correspondingly electrically connected to the first lead-out end 21a, and the first electrical connector 3221 and the first lead-out end 21a are exposed. The stator 100 is disposed in a receptacle enclosed by a housing and an end cover, a front end cover and a rear end cover are respectively located on two sides of the stator 100 in the axial direction, and the housing is sleeved on an outer circumferential side of the stator 100. To ensure insulation safety of the motor, a preset insulation distance needs to be maintained between the housing, and the first electrical connector and the first lead-out end in the radial direction (namely, the radial direction of the motor), and a preset insulation distance also needs to be maintained between the end cover (the front end cover and the rear end cover), and the first electrical connector and the first lead-out end in the axial direction (namely, the axial direction of the motor). That is, there are preset distances between the stator 100 and the end cover in the axial direction and between the stator 100 and the housing in the radial direction. The first electrical connector and the first lead-out end are in an exposed state, and insulation safety is poor. Therefore, long insulation safety distances need to be set between the stator 100 and the housing, and between the stator 100 and the end cover. Especially in the high-voltage motor, a required insulation safety distance is larger. As a result, sizes of the motor in the axial and radial directions increase, a volume of the motor is large, and it is difficult to meet a miniaturization design of the motor.

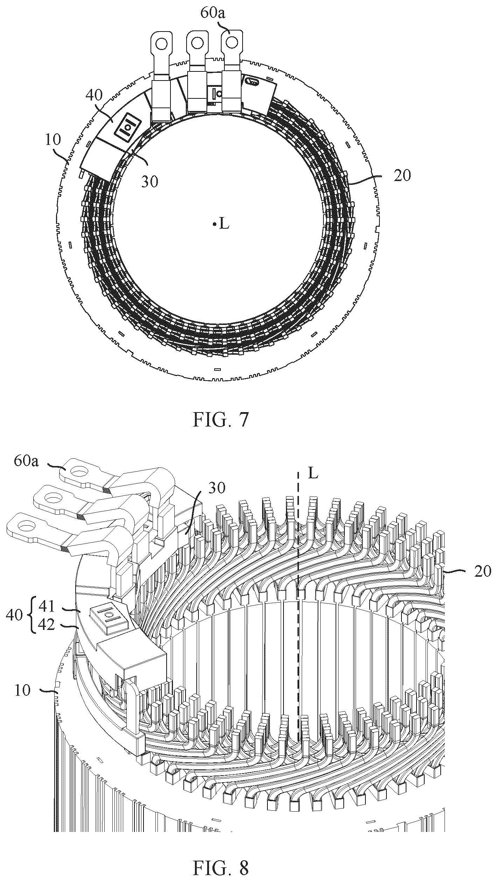

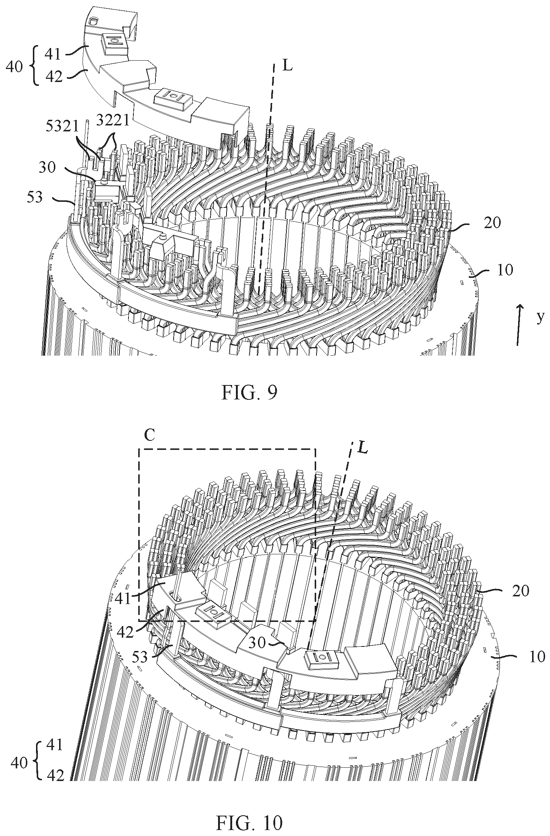

FIG. 7 is a diagram of a top-view structure of the stator in the motor according to an embodiment of this application. FIG. 8 is an enlarged view of a partial structure of a part A in FIG. 1. FIG. 9 is a diagram of partial splitting of the stator core, the first injection molding structure, and an insulation cover in the motor according to an embodiment of this application. FIG. 10 is a diagram of assembly of the stator core, the first injection molding structure, and the insulation cover in the motor according to an embodiment of this application.

To improve insulation safety of the motor and reduce a volume of the motor, in this embodiment of this application, as shown in FIG. 7 and FIG. 8, the stator 100 may further include the insulation cover 40. The insulation cover 40 is disposed on the first injection molding structure 30, to cover the first electrical connector and the first lead-out end, so that the first electrical connector and the first lead-out end are not exposed at least in the axial direction, or the first electrical connector and the first lead-out end are not exposed at least in the circumferential direction.

A forming material of the insulation cover 40 may be a material having high insulation performance, for example, polypropylene, polyethylene, or polyvinyl chloride. The forming material of the insulation cover 40 may be the same as the forming material of the first injection molding part 31. The insulation cover 40 may also be formed through injection molding.

The insulation cover 40 may be located on one side that is of the first injection molding structure 30 and that is away from the stator core 10 in the axial direction, and the insulation cover may alternatively be located on one side that is of the first injection molding structure 30 and that is away from the axis of the stator core 10. For example, the insulation cover 40 may be disposed on the side that is of the first injection molding structure 30 and that is away from the stator core, and covers a side that is of the first electrical connector and the first lead-out end and that is away from the stator core in the axial direction, that is, covers the first electrical connector and the first lead-out end in the axial direction. For example, as shown in FIG. 9, the insulation cover 40 includes a top plate 41. The top plate 41 may be located on the side that is of the first injection molding structure 30 and that is away from the stator core 10 in the axial direction (a y direction shown in the figure). The top plate 41 can cover the exposed first electrical connector (for example, the first electrical connector 3221) and the exposed first lead-out end (for example, the first lead-out end 21a). The top plate 41 may completely cover, in the axial direction, a side that is of the first electrical connector and the first lead-out end and that is away from the stator core 10. The first electrical connector and the first lead-out end are not exposed on an end surface of the stator 100 in the axial direction (as shown in FIG. 7, no exposed first electrical connector can be observed).

After the stator 100 is disposed in the receptacle and assembled to form the motor, the insulation cover 40 (the top plate 41) is disposed between the end cover and each of the first electrical connector and the first lead-out end. The insulation cover 40 may function as a barrier, to increase an electrical clearance and a creepage distance between the end cover and each of the first electrical connector and the first lead-out end. This effectively improves insulation safety between the first electrical connector, the first lead-out end, and the end cover, and can better meet an insulation safety distance requirement of the high-voltage motor. In addition, this helps reduce a length of an insulation distance between the end cover and each of the first electrical connector and the first lead-out end, that is, reduce a distance between the stator 100 and the end cover in the axial direction, reduce end space of the motor in the axial direction, reduce the size of the motor in the axial direction, and facilitate the miniaturization design of the motor.

The insulation cover 40 may be disposed on the side that is of the first injection molding structure 30 and that is away from the axis of the stator core, and covers the side that is of the first electrical connector and the first lead-out end and that is away from the axis of the stator core, that is, covers an outer side of the first electrical connector and the first lead-out end in the circumferential direction. For example, as shown in FIG. 8 and FIG. 9, the insulation cover 40 includes a side plate 42. The side plate 42 may be located on a side that is of the first injection molding structure 30 and that is away from the axis of the stator core 10 in the circumferential direction. The side plate 42 of the insulation cover 40 covers the first electrical connector (for example, the first electrical connector 3221) and the first lead-out end (for example, the first lead-out end 21a), and the side plate 42 may completely cover, in the circumferential direction, the side that is of the first electrical connector and the first lead-out end and that is away from the axis. As shown in FIG. 10, the first electrical connector is not exposed on an outer circumferential surface of the stator 100.

After the stator 100 is disposed in the receptacle and assembled to form the motor, the insulation cover 40 (the side plate 42) that can function as a barrier is disposed between the housing and each of the first electrical connector and the first lead-out end. An electrical clearance and a creepage distance between the housing and each of the first electrical connector and the first lead-out end is increased. This effectively improves insulation safety of the motor, and meets a high insulation safety distance requirement of the high-voltage motor. In addition, this helps reduce a length of an insulation distance between the housing and each of the first electrical connector and the first lead-out end, that is, reduce a distance between the stator 100 and the housing on the outer circumferential side of the stator 100, reduce a size of the motor in the circumferential direction, and facilitate the miniaturization design of the motor.

The insulation cover 40 may extend to the second electrical connector and the second lead-out end, to cover the second electrical connector and the second lead-out end. The insulation cover 40 may cover a side that is of the second electrical connector and the second lead-out end and that is away from the stator core in the axial direction. For example, as shown in FIG. 9, the top plate 41 is located on the side that is of the first injection molding structure 30 and that is away from the stator core 10, the top plate 41 may completely cover, in the axial direction, the side that is of the second electrical connector (for example, the second electrical connector 5321) and the second lead-out end (for example, the second lead-out end 22a) and that is away from the stator core 10. The second electrical connector and the second lead-out end are not exposed on the end surface of the stator 100 in the axial direction (as shown in FIG. 8). The insulation cover 40 is also disposed between the end cover and each of the second electrical connector and the second lead-out end, to function as a barrier and increase an electrical clearance and a creepage distance between the end cover and each of the second electrical connector and the second lead-out end. This further improves insulation safety of the motor, further reduces the end space of the motor in the axial direction under a high insulation safety distance requirement of the high-voltage motor, and implements the miniaturization design of the motor.

The insulation cover 40 may cover a side that is of the second electrical connector and the second lead-out end and that is away from the axis of the stator core. For example, still as shown in FIG. 9, the side plate 42 is located on the side that is of the first injection molding structure 30 and that is away from the axis of the stator core 10 in the circumferential direction. The side plate 42 may completely cover, in the circumferential direction, the side that is of the second electrical connector (for example, the second electrical connector 5321) and the second lead-out end (for example, the second lead-out end 22a) and that is away from the axis. The second electrical connector and the second lead-out end are not exposed on the outer circumferential surface of the stator 100 (as shown in FIG. 10). The insulation cover 40 that can function as a barrier is disposed between the housing and each of the second electrical connector and the second lead-out end. This improves insulation safety between the second electrical connector, the second lead-out end, and the housing, and further improves insulation safety of the motor. This can further reduce the size of the motor in the circumferential direction under a high insulation safety distance requirement of the high-voltage motor, and implements the miniaturization design of the motor more conveniently.

It should be noted that the insulation cover 40 may cover only the side that is of the first electrical connector and the first lead-out end and that is away from the stator core, or the insulation cover 40 may cover only the side that is of the first electrical connector and the first lead-out end and that is away from the axis, or the insulation cover 40 may cover the side that is of the first electrical connector and the first lead-out end and that is away from the stator core, and also cover the side that is of the first electrical connector and the first lead-out end and that is away from the axis. Correspondingly, the insulation cover 40 may alternatively cover only the side that is of the second electrical connector and the second lead-out end and that is away from the stator core, or the insulation cover 40 may cover only the side that is of the second electrical connector and the second lead-out end and that is away from the axis, or the insulation cover 40 may cover the side that is of the second electrical connector and the second lead-out end and that is away from the stator core, and also cover the side that is of the second electrical connector and the first lead-out end and that is away from the axis.

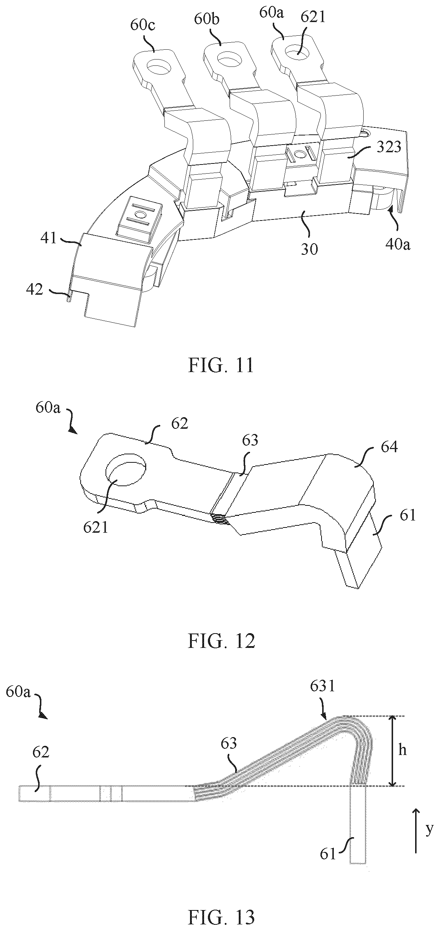

FIG. 11 is a diagram of a structure of assembly of the first injection molding structure, the insulation cover, and the terminal in the motor according to an embodiment of this application.

In this embodiment of this application, for example, the insulation cover 40 covers a side that is of the first electrical connector, the first lead-out end, the second electrical connector, and the second lead-out end and that is away from the stator core, and covers a side that is of the first electrical connector, the first lead-out end, the second electrical connector, and the second lead-out end and that is away from the axis. Refer to FIG. 11. The insulation cover 40 may include the top plate 41 and the side plate 42. The top plate 41 and the side plate 42 enclose accommodation space 40a. The top plate 41 is disposed on the side that is of the first injection molding structure 30 and that is away from the stator core 10 in the axial direction, and the side plate 42 is disposed on the side that is of the first injection molding structure 30 and that is away from the axis in the circumferential direction, so that the first injection molding structure 30 is located in the accommodation space 40a, and the first electrical connector, the first lead-out end, the second electrical connector, and the second lead-out end are located in the accommodation space 40a. The top plate 41 covers the side that is of the first electrical connector, the second electrical connector, the first lead-out end, and the second lead-out end and that is away from the stator core. The side plate 42 covers a side that is of the first electrical connector, the second electrical connector, the first lead-out end, and the second lead-out end and that is away from the axis of the stator core. The top plate 41 and the side plate 42 have good insulation isolation functions, so that the motor has better insulation safety, and miniaturization of the motor is facilitated.

Shapes of the side plate 42 and the top plate 41 may be arcs extending in the circumferential direction, so that the entire insulation cover 40 extends in the circumferential direction. This facilitates assembly and helps further reduce the size of the motor in the circumferential direction.

It should be understood that the top plate 41 covers the side that is of the first injection molding structure 30 and that is away from the stator core 10 in the axial direction, and the top plate 41 needs to avoid the second end portion, so that the second end portion is exposed, to facilitate connection between the second end portion and the control unit. For example, as shown in FIG. 11, the top plate 41 of the insulation cover 40 covers only a part of the first injection molding structure 30, so that the second end portion of the first busbar (for example, the second end portion 323 of the first busbar 32a) is located outside a side that is of the insulation cover 40 and that faces the axis of the stator core 10. The second end portion may be electrically connected to the control unit or the like through a terminal.

Certainly, in some other examples, the insulation cover 40 may alternatively completely cover the first injection molding structure 30, and an avoidance hole may be provided at a part that is of the insulation cover 40 and that is opposite to the second end portion, so that the second end portion can be exposed through the avoidance hole, and the connecting end 20a is electrically connected to the control unit.

It should be understood that a quantity of terminals may correspond to the quantity of phases of the winding structure 20, and each terminal is correspondingly connected to a first busbar connected to each phase of the winding structure. For example, as shown in FIG. 11, the terminal may include the terminal 60a, a terminal 60b, and a terminal 60c. The terminal 60a is electrically connected to the first busbar 32a, the terminal 60b is electrically connected to the first busbar 32b, and the terminal 60c is electrically connected to the first busbar 32c.

FIG. 12 is a diagram of a structure of another terminal in the motor according to an embodiment of this application. FIG. 13 is a diagram of a side-view structure of a terminal in the motor according to an embodiment of this application.

The terminal 60a is used as an example. Refer to FIG. 12. Each terminal may include a body part 63, a first connection part 61, and a second connection part 62. The first connection part 61 of the terminal 60a is electrically connected to the electrical connection surface 3231 on the second end portion 323, and the second connection part 62 is electrically connected to the control unit.

For example, the second connection part 62 may be provided with a first assembly hole 621, and the second connection part 62 may be electrically connected to the control unit through the first assembly hole 621. For example, the control unit may include a connector base, and the connector base may be provided with a second assembly hole. The motor may further include a fastener, and the fastener may be separately connected to the first assembly hole 621 and the second assembly hole, so that the winding structure 20 can be connected to the control unit through a terminal. The fastener may be a bolt, a screw, or the like. The first assembly hole 621 and the second assembly hole may be threaded holes, light holes, or the like that can be matched with the fastener.

The body part 63 may be flexible, and can be bent to form a bending structure 631 (as shown in FIG. 13). When structures such as the end cover and an oil injection ring are assembled, the body part 63 may be bent to be in a vertical state (parallel to the axial direction). Avoidance is implemented to facilitate assembly of the end cover and the like. After assembly is completed, the body part 63 may be bent to form the bending structure 631, so that the first connection part 61 of the terminal is connected to the first busbar, and the second connection part 62 is connected to the control unit. The first connection part 61 and the second connection part 62 may have specific hardness, to implement electrical connection.

To protect the soft main body part, still as shown in FIG. 12, a tube 64 may be sleeved on the main body part. The tube 64 protects the main body part and reduces damage caused by bending to the main body part. In addition, the tube 64 may be an insulation tube, and can perform an insulation isolation function, to improve insulation safety of the motor.

For example, as shown in FIG. 13, in the axial direction of the stator core, a height from one end that is of the bending structure 631 and that is away from the stator core 10 to the stator core 10 may be higher than a height from the second connection part 62 to the stator core 10. A maximum height of the bending structure 631 is higher than a maximum height of the second connection part 62, for example, higher than a distance h in FIG. 13, so that an acute angle exists between a part that is of the bending structure 631 and that is adjacent to the first connection part 61 and a part that is of the bending structure 631 and that is adjacent to the second connection part 62. The bending structure 631 has large bending and adjustment space. In this way, the second connection part 62 has large adjustment flexibility. This facilitates alignment between the first assembly hole and the second assembly hole of the second connection part 62, implements electrical connection between the terminal and the control unit, and can reduce difficulty in assembling the terminal and the control unit, and the like.

A forming material of the terminal may be a material with high conductivity. For example, the terminal may be a metal piece formed by copper foil or the like. An example in which the terminal is a structure formed by copper foil is used. For example, the terminal may be formed by superimposing a plurality of layers of copper foil. Hard copper sheets may be formed at two ends of the terminal through resistance welding or the like, to respectively form the first connection part 61 and the second connection part 62. The main body part located in the middle area is not welded, and is flexible to some extent, to implement bending.

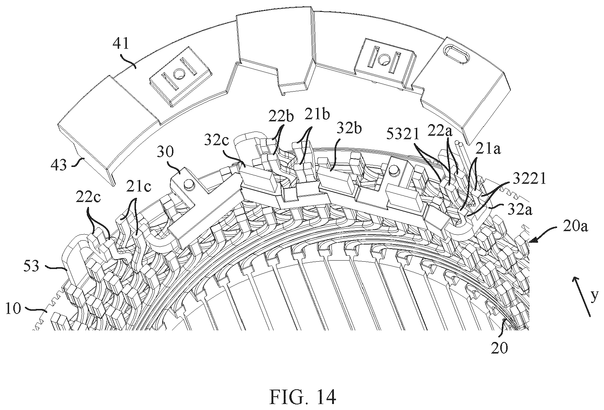

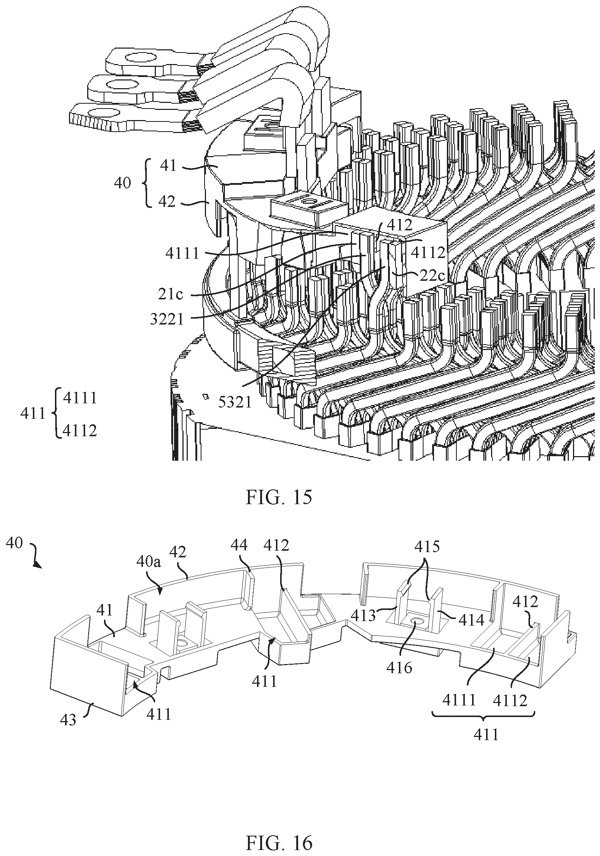

FIG. 14 is a diagram of a split structure of the stator core, the first injection molding structure, and the insulation cover in the motor according to an embodiment of this application. FIG. 15 is a diagram of a partial cross-sectional structure of the stator in the motor according to an embodiment of this application. FIG. 16 is a diagram of a structure of a rear side of the insulation cover in the motor according to an embodiment of this application.

In this embodiment of this application, both the first lead-out end and the second lead-out end of the winding structure 20 are located at the connecting end 20a of the winding structure 20, so that the first busbar and the second busbar are respectively connected to the first lead-out end and the second lead-out end. Refer to FIG. 14. The first injection molding structure 30 may be located on one side that is of the connecting end 20a and that is away from the stator core in the axial direction, and the second busbar 53 may be located on an outer side of the connecting end 20a in the circumferential direction, that is, the second busbar 53 is located on the outer circumferential side of the connecting end 20a.

The first electrical connector, the first lead-out end, the second electrical connector, and the second lead-out end may be spaced from each other in the circumferential direction of the winding structure 20. A second lead-out end of each phase of the winding structure and a second electrical connector connected to the second lead-out end are disposed adjacent to a first lead-out end of the phase of the winding structure and a first electrical connector connected to the first lead-out end. Refer to FIG. 14. The U-phase winding structure is used as an example. The second lead-out end 22a and the second electrical connector 5321 are disposed more adjacent to the first lead-out end 21a and the first electrical connector 3221, to ensure insulation safety.

To isolate different phases of the winding structure and correspondingly connected first electrical connectors and second electrical connectors, as shown in FIG. 15, an isolation groove 411 is formed on the insulation cover 40. Specifically, a plurality of isolation grooves 411 may be formed on a surface that is of the top plate 41 and that faces the stator core 10 (as shown in FIG. 16).

A first lead-out end and a second lead-out end of a same phase of the winding structure, a first electrical connector connected to the first lead-out end, and a second electrical connector connected to the second lead-out end are located in one isolation groove. For example, as shown in FIG. 15, the first electrical connector 3221, the first lead-out end 21c, the second electrical connector 5321, and the second lead-out end 22c are located in one isolation groove 411. In other words, a first lead-out end and a second lead-out end that are of different phases of the winding structure, and correspondingly connected first electrical connector and second electrical connector are located in different isolation grooves. This increases electrical clearances and creepage distances between different phases of the winding structure and between the first electrical connector and the second electrical connector that are correspondingly connected to the different phases of the winding structure, and further improves insulation safety of the motor.

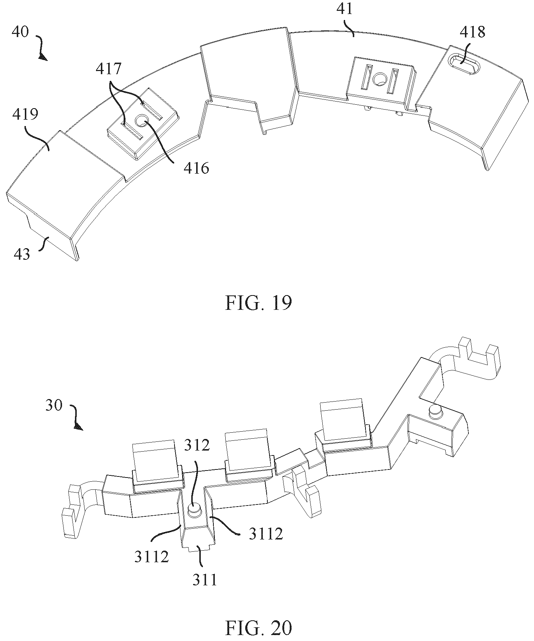

Refer to FIG. 16. A side that is of the top plate 41 and that faces the stator core 10 may be recessed to form the isolation groove 411, a protrusion structure 419 may be formed at a part corresponding to the isolation groove 411 on a surface that is of the top plate 41 and that is away from the stator core 10 (as shown in FIG. 19), and the isolation groove 411 may extend to the protrusion structure 419, to deepen a depth of the isolation groove 411 and improve the insulation isolation effect.

Still refer to FIG. 16. A baffle 412 may be disposed in the isolation groove 411, and the baffle 412 may divide the isolation groove 411 into a first partition groove 4111 and a second partition groove 4112. In a same phase of the winding structure, a first lead-out end and a first electrical connector connected to the first lead-out end are located in the first partition groove 4111, and a second lead-out end and a second electrical connector connected to the second lead-out end are located in the second partition groove 4112. For example, as shown in FIG. 15, the first electrical connector 3221 and the first lead-out end 21c are located in the first partition groove 4111, and the second electrical connector 5321 and the second lead-out end 22c are located in the second partition groove 4112. The baffle may isolate and insulate the first lead-out end and the first electrical connector connected to the first lead-out end from the second lead-out end and the second electrical connector connected to the second lead-out end in the same phase of the winding structure. This increases an electrical clearance and a creepage distance between the first lead-out end and the first electrical connector, and the second lead-out end and the second electrical connector in the same phase of the winding structure, and further improves insulation safety of the motor.

Still refer to FIG. 16. The insulation cover 40 may further include end plates 43. The end plates 43 are disposed on two sides of the top plate 41 and the side plate 42 in the circumferential direction (as shown in FIG. 14), and the end plate 43 may be separately connected to the top plate 41 and the side plate 42. On one hand, strength of the insulation cover 40 can be increased, and insulation stability of the insulation cover 40 can be ensured. On the other hand, the end plates 43 shield two sides of the first injection molding structure 30 in the circumferential direction, to further seal the accommodation space 40a. This helps further increase a creepage distance between the first electrical connector and the second electrical connector, and another metal mechanical part in the motor, and helps improve insulation safety of the motor.

A reinforcing member 44 may be further disposed on the insulation cover 40, and the reinforcing member 44 is separately connected to the top plate 41 and the side plate 42, to increase strength of the insulation cover 40 and ensure insulation stability of the insulation cover 40.

In this embodiment of this application, the insulation cover 40 and the first injection molding structure 30 may be assembled in a plurality of manners. For example, the insulation cover 40 may be disposed on the first injection molding part 31 in an unremovable manner like bonding. Alternatively, the insulation cover 40 may be assembled and connected to the first injection molding part 31 in a detachable manner, to facilitate disassembly and installation of the insulation cover 40, simplify an assembly process, and improve installation efficiency.

For example, a first clamping structure may be disposed on the insulation cover, and a second clamping structure may be disposed on the first injection molding part. The insulation cover may be connected to the first injection molding part through clamping and matching between the first clamping structure and the second clamping structure, to facilitate installation and disassembly.

For example, still as shown in FIG. 16, a protruding first clamping wall 413 and a protruding second clamping wall 414 may be disposed on a surface that is of the top plate 41 and that faces the first injection molding part 31. The first clamping wall 413 is disposed opposite to the second clamping wall 414, and there is an avoidance gap between the first clamping wall 413 and the second clamping wall 414. Protrusions are disposed on a side surface that is of the first clamping wall 413 and that faces the second clamping wall 414, and a side surface that is of the second clamping wall 414 and that faces the first clamping wall 413, to form the first clamping structure 415.

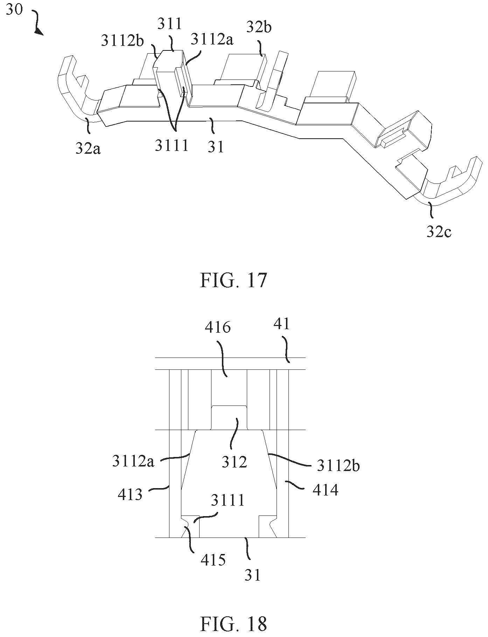

FIG. 17 is another diagram of first assembly in the motor according to an embodiment of this application. FIG. 18 is a diagram of a partial cross-sectional structure of clamping and matching between the first injection molding part and the insulation cover in the motor according to an embodiment of this application. FIG. 19 is a diagram of a structure of a front side of the insulation cover in the motor according to an embodiment of this application. FIG. 20 is still another diagram of a structure of the first injection molding structure in the motor according to an embodiment of this application.

Refer to FIG. 17. A clamping part 311 may be formed on the first injection molding part 31. Specifically, the clamping part 311 protrudes on a side that is of the first injection molding part 31 and that is away from the axis (as shown in FIG. 14). There are grooves on two opposite side surfaces of the clamping part 311, to form the second clamping structure 3111.

As shown in FIG. 18, the protruding first clamping structure 415 may be clamped in the recessed second clamping structure 3111, to implement clamping and matching between the first injection molding part 31 and the insulation cover 40 (the top plate 41). The avoidance gap between the first clamping wall 413 and the second clamping wall 414 can provide specific movable space for the first clamping wall 413 and the second clamping wall 414, so that the first clamping wall 413 and the second clamping wall 414 deform to some extent under external force, and the first clamping structure 415 on the first clamping wall 413 and the second clamping wall 414 is clamped to and matched with the second clamping structure 3111 on the clamping part 311.

For example, the first clamping structure 415 may be located at an end that is of the first clamping wall 413 and that is away from the top plate 41, and an end that is of the second clamping wall 414 and that is away from the top plate 41. The second clamping structure 3111 may be located at an end that is of the clamping part 311 and that is away from the top plate 41. After the first clamping structure 415 is matched with the second clamping structure 3111, the clamping part 311 may be located in the avoidance gap between the first clamping wall 413 and the second clamping wall 414. This helps enhance clamping strength of the first clamping structure 415 and the second clamping structure 3111, enhance assembly fastness of the first injection molding part 31 and the insulation cover 40, and ensure insulation stability.

Still refer to FIG. 18. To facilitate clamping of the first clamping structure 415 and the second clamping structure 3111, guide slopes, such as a guide slope 3112a and a guide slope 3112b may be respectively disposed at the two opposite side surfaces of the clamping part 311 in the circumferential direction. The two guide slopes 3112 tilt in directions opposite to each other from an end that is of the clamping part 311 and that faces the top plate 41 to the end that is of the clamping part 311 and that is away from the top plate 41. The two guide slopes may be in a splayed structure, and the guide slopes are located on a side that is of the second clamping structure 3111 and that is away from the stator core 10, so that the first clamping structure 415 of the insulation cover 40 is clamped to and matched with the second clamping structure 3111 after passing the guide slope. The guide slopes guide well and facilitate assembly.

Refer to FIG. 19. The top plate 41 may be further provided with first avoidance holes 417. The first avoidance holes 417 may be respectively located on one side of the first clamping wall 413 and one side of the second clamping wall 414, and the first avoidance holes 417 are disposed adjacent to the first clamping wall 413 and the second clamping wall 414, so that the first clamping wall 413 and the second clamping wall 414 are formed through injection molding through the first avoidance holes 417 in a process of forming the insulation cover 40 through injection molding.

The insulation cover 40 may further be provided with a second avoidance hole 418, and the second avoidance hole 418 may be configured to fasten a lead 522 of a temperature sensor 52.

In addition, to facilitate assembly of the insulation cover 40 and the first injection molding structure 30, as shown in FIG. 18 and FIG. 19, a first positioning structure 416 may be disposed on the top plate 41. Refer to FIG. 20. A second positioning structure 312 may be disposed on the first injection molding part 31. The first positioning structure 416 is matched with the second positioning structure 312 to perform positioning, to facilitate accurate assembly between the insulation cover 40 and the first injection molding structure 30. This improves assembly efficiency.

The first positioning structure 416 may be a positioning hole, and the positioning hole may pass through the top plate 41, or the positioning hole may be a blind hole disposed on the surface that is of the top plate 41 and that faces the stator core 10. The second positioning structure 312 may be a protruding positioning rod, and the second positioning structure 312 may be inserted and disposed in the first positioning structure 416 to perform a positioning function (as shown in FIG. 18).

The first positioning structure 416 may be located between the first clamping wall 413 and the second clamping wall 414 (as shown in FIG. 16), so that clamping and matching between the insulation cover 40 and the first injection molding part 31 can be easily implemented during positioning. This facilitates assembly.

In this embodiment of this application, a temperature of the stator is monitored to control stator cooling, and the like. The motor may further include a temperature sensor, and the temperature sensor may be disposed on the stator. Specifically, the temperature sensor may be disposed adjacent to the winding structure, and is in direct or indirect contact with the winding structure to improve accuracy of temperature monitoring during stator operation.

Currently, a common temperature sensor is mostly disposed on the second busbar, a surface of the temperature sensor is attached to a surface of the second busbar, and other surfaces are exposed. When cooling liquid like cooling oil is used to cool the stator, the cooling liquid inevitably contacts the temperature sensor. As a result, a temperature detection feedback delay of the temperature sensor is long, and temperature detection is inaccurate.

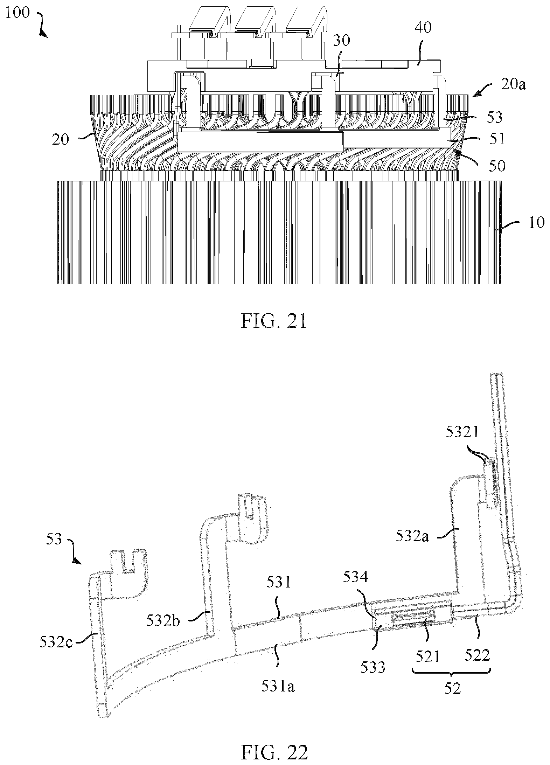

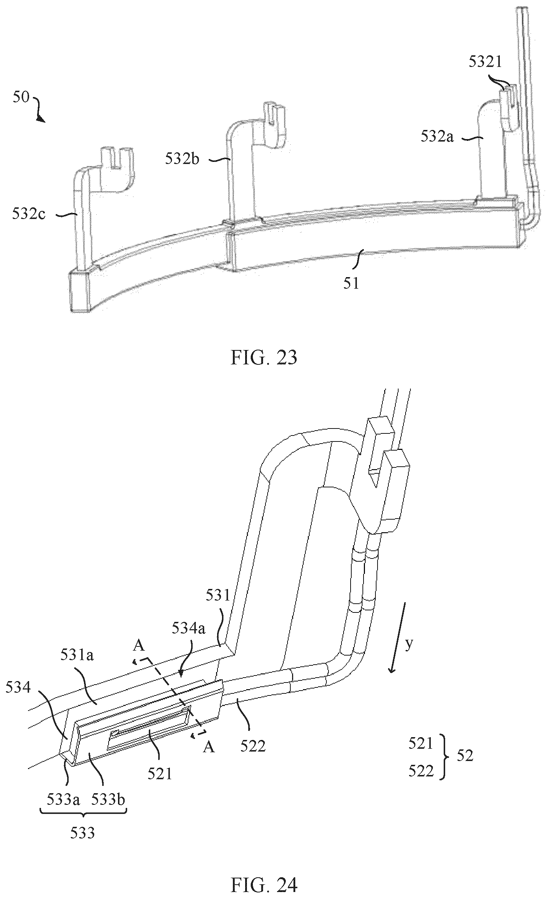

FIG. 21 is a diagram of a partial side-view structure of the stator in the motor according to an embodiment of this application. FIG. 22 is a diagram of a second injection molding structure in the motor according to an embodiment of this application. FIG. 23 is a diagram of a structure of assembly of the second busbar and the temperature sensor in the motor according to an embodiment of this application. FIG. 24 is an enlarged view of a partial structure of assembly of the second busbar and the temperature sensor in the motor according to an embodiment of this application.

Refer to FIG. 21. In this embodiment of this application, the stator 100 may further include the second injection molding structure 50. The second injection molding structure 50 is disposed on the outer circumferential side of the connecting end 20a of the winding structure 20. The second injection molding structure 50 may include a second injection molding part 51, the second busbar 53, and a temperature sensor (not shown in the figure).

Refer to FIG. 22. The second busbar 53 may include a second main body part 531 and the plurality of connection end portions (such as the connection end portion 532a, the connection end portion 532b, and the connection end portion 532c in the figure). The plurality of connection end portions are disposed on the second main body part 531. The second main body part 531 may be located on the outer circumferential side of the connecting end 20a. The second main body part 531 may be of an arc structure, and an extension direction of the second main body part 531 may be parallel to the circumferential direction of the winding structure 20, to facilitate the second busbar 53 (the second injection molding structure 50) to be disposed on a circumferential side of the winding structure 20.

The temperature sensor 52 is attached to one surface 531a of the second main body part 531, and heat generated when the stator 100 and the winding structure 20 operate may be transferred to the second busbar 53 and the temperature sensor 52, to detect the temperature of the stator 100. The second injection molding part 51 wraps the temperature sensor 52 and the second main body part 531. As shown in FIG. 23, the connection end portion 532a, the connection end portion 532b, and the connection end portion 532c are located outside the second injection molding part 51, so that the second electrical connector on the connection end portion (for example, the second electrical connector 5321 on the connection end portion 532a) is exposed. This facilitates electrical connection.

The second injection molding part 51 can isolate and protect the temperature sensor 52, and can effectively prevent the cooling liquid from directly contacting the temperature sensor 52. This reduces impact of the cooling liquid on the temperature sensor 52, reduces the feedback delay of the temperature sensor 52, and improves detection accuracy of the temperature sensor 52. Effect of a low delay and high precision is implemented under a condition of detecting the temperature of the stator 100.

In addition, the second injection molding part 51 wraps the first main body part 321 of the second busbar 53. This helps improve insulation safety between the second busbar 53 and the housing on the outer circumferential side of the stator 100 and between the second busbar 53 and the first busbar, helps reduce the sizes of the motor in the radial direction and the axial direction, and facilitates the miniaturization design of the motor.

A forming material of the second injection molding part 51 may be a material with high insulation, for example, polypropylene, polyethylene, or polyvinyl chloride. During injection molding of the second injection molding part 51, the second busbar 53 fastened with the temperature sensor 52 and the second injection molding part 51 may form the integral second injection molding structure 50 through injection molding.

It should be understood that the temperature sensor 52 may alternatively form an injection molding structure through injection molding with another mechanical part directly or indirectly connected to the winding structure 20. For example, the temperature sensor may be attached to the first main body part of the first busbar. The first injection molding part wraps the temperature sensor and the first main body part to form the first injection molding structure. The first injection molding part can also isolate and protect the temperature sensor. This reduces impact of the cooling liquid on the temperature sensor, and implement a low delay and high precision of temperature detection under the condition of detecting the temperature of the stator.

Alternatively, the stator may further include a third injection molding structure. The third injection molding structure includes a third injection molding part, a temperature sensor, and the first lead-out end. The temperature sensor may be attached to the first lead-out end. The third injection molding part wraps the temperature sensor and the first lead-out end and can also protect the temperature sensor. Effect of a low delay and high precision is implemented under the condition of detecting the temperature of the stator.

In this embodiment of this application, an example in which the temperature sensor 52 is disposed on the second busbar 53 and forms the second injection molding structure 50 is used for description.

Still refer to FIG. 24. A thermally conductive member 533 may be disposed on the second main body part 531, and the thermally conductive member 533 is disposed on the surface 531a of the second main body part 531. The thermally conductive member 533 and the surface of the second main body part 531 may enclose an accommodation cavity 534, the temperature sensor 52 may be accommodated in the accommodation cavity 534, and the temperature sensor 52 (a detection body 521) may be attached to at least one surface of the thermally conductive member 533.

On one hand, the thermally conductive member 533 can accommodate and fasten the temperature sensor 52, so that the temperature sensor 52 is fastened to the second busbar 53. On the other hand, the temperature sensor 52 is attached to the at least one surface of the thermally conductive member 533, and heat of the second busbar 53 may also be transferred to the temperature sensor 52 through the thermally conductive member 533. This increases an area of heat transfer between the temperature sensor 52 and the second busbar 53, further reduces a feedback delay of temperature detection, and improves detection accuracy.

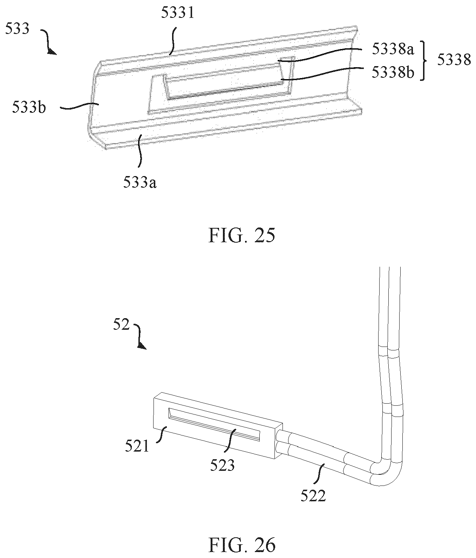

The temperature sensor 52 may include the detection body 521 and the lead 522 (as shown in FIG. 26). The detection body 521 is configured to detect a temperature. The detection body 521 may be connected to the control unit or the like through the lead 522, to transmit a signal. The detection body 521 may be disposed on the second main body part 531 by using the thermally conductive member 533, and the detection body 521 is attached to the thermally conductive member 533 and the second main body part 531.

The thermally conductive member 533 may be integrally formed on the second main body part 531 in a process of forming the second busbar 53. Certainly, in some other examples, the thermally conductive member 533 may alternatively be formed separately from the second busbar 53, and then disposed on the second busbar 53. A specific disposing manner may be welding, bonding, clamping and fastening, thread fastening, or the like.

The thermally conductive member 533 may have a plurality of specific structures and shapes, as long as the thermally conductive member 533 can form the accommodation cavity 534 with the second main body part 531 to fasten the temperature sensor 52.

FIG. 25 is a diagram of a structure of the thermally conductive member on the second busbar in the motor according to an embodiment of this application.

For example, in a possible implementation, as shown in FIG. 25, the thermally conductive member 533 may include a bottom surface 533a and a side surface 533b. As shown in FIG. 24, a first end of the bottom surface 533a is connected to the second main body part 531, a second end of the bottom surface 533a is connected to the side surface 533b, and the side surface 533b may be disposed opposite to the second main body part 531. The surface 531a of the second main body part 531, the bottom surface 533a, and the side surface 533b jointly enclose the accommodation cavity 534. The temperature sensor 52 is disposed in the accommodation cavity 534. The temperature sensor 52 (the detection body 521) may be separately attached to the bottom surface 533a and the side surface 533b, so that the temperature sensor 52 can be better attached to the thermally conductive member 533, and a thermal contact area is large, to implement a low feedback delay and high detection accuracy.

The temperature sensor 52 may be disposed in the accommodation cavity 534 through insertion. For example, there is a gap between the second main body part 531 and one end that is of the side surface 533b and that is away from the bottom surface 533a to form a first cavity opening 534a (as shown in FIG. 24). For example, the first cavity opening 534a is located at one end of the accommodation cavity 534 in the axial direction, and the temperature sensor 52 may be inserted and disposed in the accommodation cavity 534 through the first cavity opening 534a (an insertion direction is shown as an arrow direction in the figure), to facilitate assembly.

To improve disposition stability of the temperature sensor 52 on the second busbar 53, still as shown in FIG. 25, a spring structure 5338 is further disposed on the thermally conductive member 533. The spring structure 5338 may include a fastening end 5338a and an elastic end 5338b, and the spring structure 5338 is disposed on the thermally conductive member 533 by using the fastening end 5338a. For example, the fastening end 5338a may be disposed on the side surface 533b of the thermally conductive member 533, or the fastening end 5338a may alternatively be disposed on the bottom surface 533a of the thermally conductive member 533. For example, the fastening end 5338a is disposed on the side surface 533b of the thermally conductive member 533. There is a gap between the elastic end 5338b and the side surface 533b, to provide moving space for elastic deformation of the elastic end 5338b.

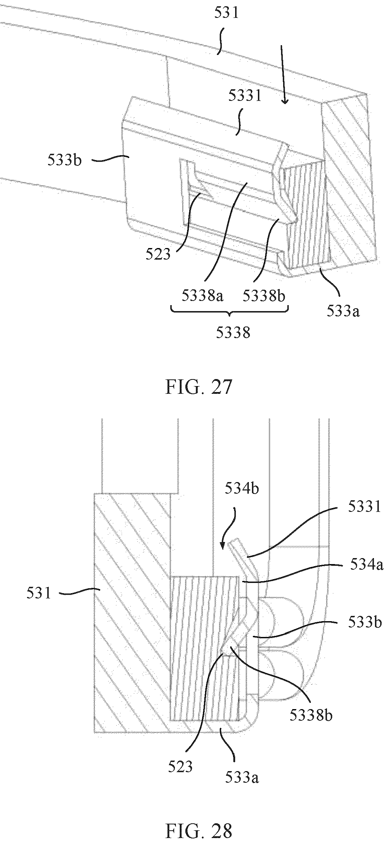

FIG. 26 is a diagram of a structure of the temperature sensor in the motor according to an embodiment of this application. FIG. 27 is a diagram of a partial cross-sectional structure of assembly of the second busbar and the temperature sensor in the motor according to an embodiment of this application. FIG. 28 is a diagram of a partial cross-sectional structure of the motor in FIG. 24 along a surface A-A.

Refer to FIG. 26, the temperature sensor 52 is provided with an insertion slot 523 configured to be matched with the spring structure 5338. As shown in FIG. 27, the fastening end 5338a of the spring structure 5338 is connected to the side surface 533b, and the elastic end 5338b of the spring structure 5338 is located on a side of the fastening end 5338a in an insertion direction (an arrow direction in the figure) of the temperature sensor 52. The first end of the elastic end 5338b is connected to the fastening end 5338a, and the second end of the elastic end 5338b obliquely extends into the accommodation cavity.

Insertion of the temperature sensor 52 from the first cavity opening 534a presses the elastic end 5338b. When the temperature sensor 52 is inserted into the accommodation cavity 534, as shown in FIG. 27, the elastic end 5338b may be inserted into the insertion slot 523, and the temperature sensor 52 is fastened through matching between the elastic end 5338b and the insertion slot 523. In addition, rebound force of the elastic end 5338b may also act on the temperature sensor 52 and press the temperature sensor 52, so that the temperature sensor 52 can be better attached to the second main body part 531.

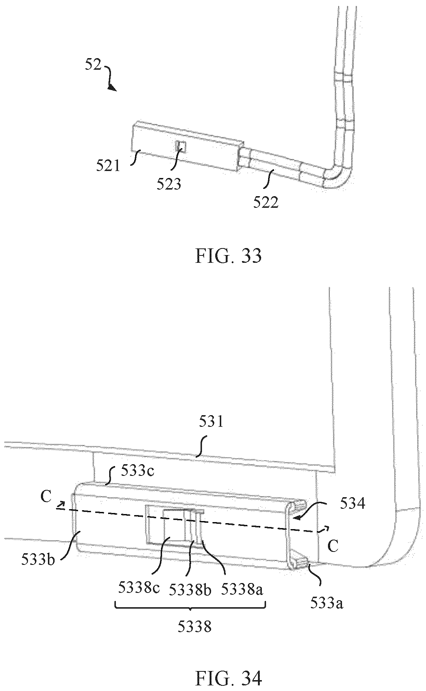

It should be noted that the spring structure 5338 may further include another shape structure. For example, the spring structure 5338 may further include an extension end 5338c. A first end of the extension end 5338c may be connected to the elastic end 5338b, and a second end of the extension end 5338c may extend towards the outside of the accommodation cavity (as shown in FIG. 34), to enrich shapes of the spring structure 5338, so as to improve flexibility of the assembly structure between the temperature sensor 52 and the second busbar 53.

It should be understood that a shape of the insertion slot 523 on the temperature sensor 52 may be changed based on a shape of the spring structure 5338, so that the shape of the insertion slot 523 may match the shape of the elastic end 5338b. This facilitates insertion and matching between the insertion slot 523 and the spring structure 5338, and implements positioning of the temperature sensor 52.

Still refer to FIG. 27. A first limiting structure 5331 may be further disposed on the thermally conductive member 533, and the first limiting structure 5331 is configured to prevent the temperature sensor 52 from falling off from the first cavity opening 534a. Specifically, the first limiting structure 5331 may be disposed at the end that is of the side surface 533b and that is away from the bottom surface 533a. A first end of the first limiting structure 5331 may be connected to the side surface 533b, and a second end of the first limiting structure 5331 may extend towards the second main body part 531, so that the first limiting structure 5331 is obliquely disposed on the side surface 533b, and an inclined included angle (not equal to 0 degrees or 90 degrees) is formed between the first limiting structure 5331 and the side surface 533b.

As shown in FIG. 28, a second cavity opening 534b is formed between the second end of the first limiting structure 5331 and the second main body part 531, and a diameter of the second cavity opening 534b is less than a diameter of the first cavity opening 534a. The first limiting structure 5331 is a sheet-like structure with a small size, and may be a metal sheet structure formed when the thermally conductive member is formed. The first limiting structure 5331 may deform under external force, and the temperature sensor 52 may be inserted and disposed in the accommodation cavity 534 through the second cavity opening 534b and the first cavity opening 534a in sequence. Because the diameter of the second cavity opening 534b is small, it is difficult for the temperature sensor 52 to pass through the second cavity opening 534b and fall off from the accommodation cavity 534. This further limits the temperature sensor 52 and improves disposition stability of the temperature sensor 52.

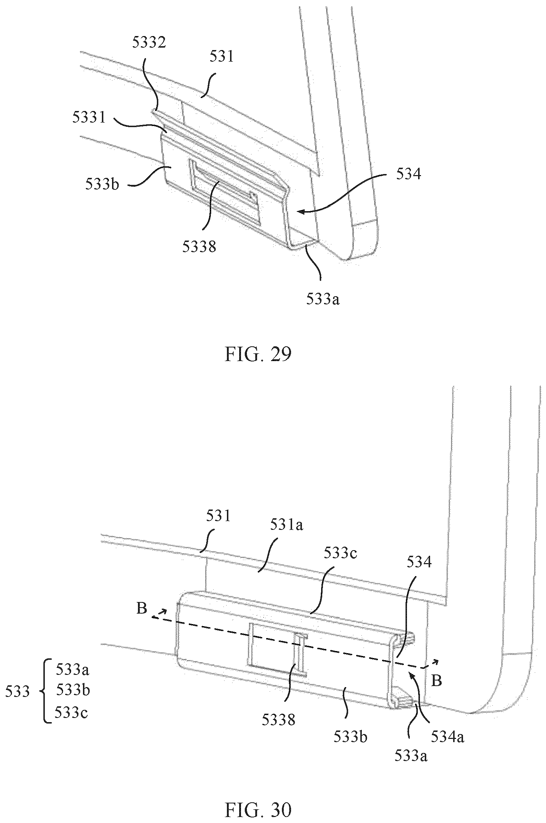

FIG. 29 is a diagram of a partial structure of the second busbar in the motor according to an embodiment of this application.

To facilitate insertion of the temperature sensor 52 into the accommodation cavity 534, as shown in FIG. 29, a first guide structure 5332 may be further disposed on the thermally conductive member 533. A first end of the first guide structure 5332 may be connected to the second end of the first limiting structure 5331, so that the first guide structure 5332 is disposed on the first limiting structure 5331. A second end of the first guide structure 5332 may extend towards a direction away from the second main body part 531. A second guide structure 5336 may be disposed inclined to the side surface 533b and the second main body part 531, and an inclined included angle (not equal to 0 degrees or 90 degrees) is formed between the second guide structure 5336 and the side surface 533b. In a direction from the second end to the first end of the first guide structure 5332, a gap distance between the first guide structure 5332 and the second main body part 531 may gradually decrease, to play a guiding role. This facilitates insertion of the temperature sensor 52 into the accommodation cavity 534 through the first guide structure 5332, the second cavity opening 534b, and the first cavity opening 534a.

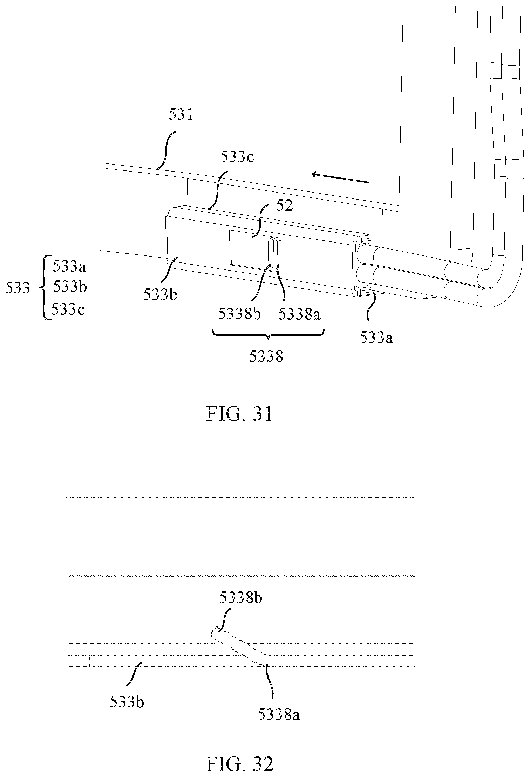

FIG. 30 is a diagram of another structure of the second busbar in the motor according to an embodiment of this application. FIG. 31 is a diagram of another structure of assembly of the second busbar and the temperature sensor according to an embodiment of this application. FIG. 32 is a diagram of a cross-sectional structure of the motor in FIG. 30 along a surface B-B.

In another possible implementation, as shown in FIG. 30, the thermally conductive member 533 may further include a top surface 533c. The bottom surface 533a, the side surface 533b, and the top surface 533c are sequentially connected. The side surface 533b is disposed opposite to the second main body part 531. The bottom surface 533a may be separately connected to the surface of the second main body part 531 and the side surface 533b, the side surface 533b is connected to the top surface 533c, and an end that is of the top surface 533c and that is away from the side surface 533b extends towards the second main body part 531. The bottom surface 533a, the side surface 533b, the top surface 533c, and the surface 531a of the second main body part 531 may jointly enclose the accommodation cavity 534. As shown in FIG. 31, the temperature sensor 52 is disposed in the accommodation cavity 534, the temperature sensor 52 (the detection body 521) may be separately attached to the bottom surface 533a, the side surface 533b, and the top surface 533c, to further increase an attachment contact surface between the temperature sensor 52 and the thermally conductive member 533, further reduce a feedback delay of temperature detection, and improve detection accuracy.

The end that is of the top surface 533c and that is away from the side surface 533b may extend to the surface 531a of the second main body part 531, and press against or connect to the second main body part 531, or there may be a gap between the second main body part 531 and the end that is of the top surface 533c and that is away from the side surface 533b, as long as the accommodation cavity 534 configured to accommodate the temperature sensor 52 can be enclosed with the second main body part 531.

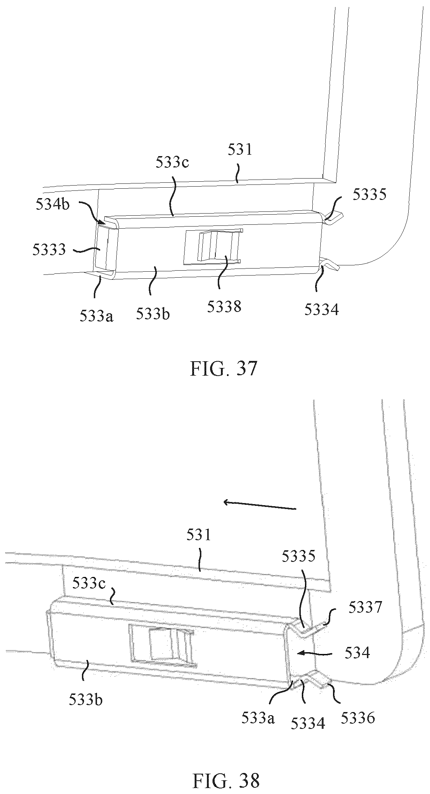

Correspondingly, the temperature sensor 52 may alternatively be disposed in the accommodation cavity 534 through insertion. For example, the bottom surface 533a, the side surface 533b, the top surface 533c, and the second main body part 531 may enclose the accommodation cavity 534 with openings at two ends, and the openings at two ends are respectively the first cavity opening 534a and the second cavity opening 534b (as shown in FIG. 37). The first cavity opening 534a and the second cavity opening 534b may be located at two ends of the accommodation cavity 534 in the circumferential direction, the first cavity opening 534a may be located on a side that is of the second cavity opening 534b and that is closer to an edge of the second busbar 53, and the temperature sensor 52 may be inserted and disposed in the accommodation cavity 534 through the first cavity opening 534a, to facilitate assembly of the temperature sensor 52.

To improve disposition stability of the temperature sensor 52, still as shown in FIG. 31, the spring structure 5338 may alternatively be disposed on the thermally conductive member 533, and the spring structure 5338 is fastened to the thermally conductive member 533 by using the fastening end 5338a. The fastening end 5338a may be disposed on the side surface 533b, the fastening end 5338a may be disposed on the bottom surface 533a, or the fastening end 5338a may be disposed on the top surface 533c.

As shown in FIG. 32, for example, the fastening end 5338a is disposed on the side surface 533b. There is a gap between the elastic end 5338b and the side surface 533b to provide space for deformation of the elastic end 5338b. The fastening end 5338a of the spring structure 5338 is connected to the side surface 533b, and the elastic end 5338b is located on a side of the fastening end 5338a in an insertion direction (a direction shown by an arrow in FIG. 31) of the temperature sensor 52. The first end of the elastic end 5338b is connected to the fastening end 5338a, and the second end of the elastic end 5338b extends obliquely into the receptacle.

FIG. 33 is a diagram of another structure of the temperature sensor in the motor according to an embodiment of this application.

Correspondingly, as shown in FIG. 33, the temperature sensor 52 may be provided with the insertion slot 523, and insertion and matching between the insertion slot 523 and the elastic end 5338b can be implemented. Insertion of the temperature sensor 52 from the first cavity opening 534a presses the elastic end 5338b. When the temperature sensor 52 is inserted into the accommodation cavity 534, the elastic end 5338b is matched with the insertion slot 523 to fasten the temperature sensor 52. In addition, the elastic end 5338b presses the temperature sensor 52, so that the temperature sensor 52 can be better attached to the second main body part 531.

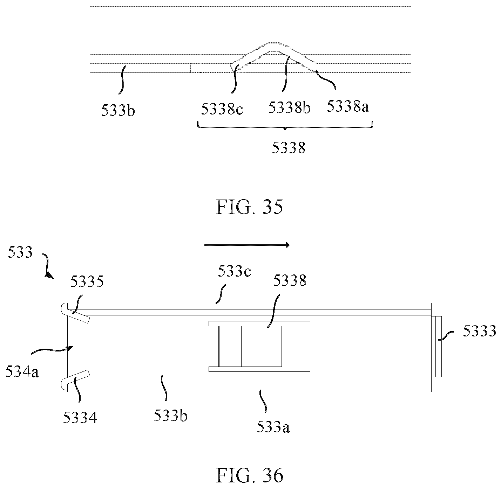

FIG. 34 is a diagram of still another structure of the second busbar in the motor according to an embodiment of this application. FIG. 35 is a diagram of a cross-sectional structure of the motor in FIG. 34 along a surface C-C.

The spring structure 5338 may alternatively be in another structure form. For example, as shown in FIG. 34, the spring structure 5338 may further include the extension end 5338c. The first end of the extension end 5338c is connected to the elastic end 5338b, and the second end of the extension end 5338c extends towards the outside of the accommodation cavity 534. Refer to FIG. 35. The shape of the spring structure 5338 may be a tick shape. This enriches shape designs of the spring structure 5338.

To facilitate insertion and matching between the insertion slot 523 and the spring structure 5338, the shape of the insertion slot 523 may match the shape of the spring structure 5338, to better position the temperature sensor 52.

FIG. 36 is a diagram of another structure of the thermally conductive member in the motor according to an embodiment of this application. FIG. 37 is a diagram of yet another structure of the second busbar in the motor according to an embodiment of this application. FIG. 38 is a diagram of still yet another structure of the second busbar in the motor according to an embodiment of this application.

Refer to FIG. 36. To further improve disposition stability of the temperature sensor 52, a second limiting structure 5333 may be disposed on the thermally conductive member 533, and the second limiting structure 5333 is configured to prevent the temperature sensor 52 from falling off from the second cavity opening 534b. Specifically, the second limiting structure 5333 is located at an end that is of the thermally conductive member 533 and that is adjacent to the second cavity opening 534b (as shown in FIG. 37). A first end of the second limiting structure 5333 may be connected to the side surface 533b, and a second end of the second limiting structure 5333 extends towards the second main body part 531, so that the second limiting structure 5333 covers at least a part of the second cavity opening 534b. The second limiting structure 5333 plays a role of blocking and limiting, and prevents the temperature sensor 52 from falling off from the second cavity opening 534b, to improve disposition stability of the temperature sensor 52 in the accommodation cavity 534.

The second end of the second limiting structure 5333 may extend to the second main body part 531, and press against or connect to the second main body part 531, or there may be a gap distance between the second end of the second limiting structure 5333 and the second main body part 531, as long as the temperature sensor 52 can be limited.

To prevent the temperature sensor 52 from falling off from the first cavity opening 534a, for example, a third limiting structure 5334 and a fourth limiting structure 5335 may be further disposed on the thermally conductive member 533. Still refer to FIG. 36. The third limiting structure 5334 and the fourth limiting structure 5335 are respectively located at ends that are of the thermally conductive member 533 and that are adjacent to the first cavity opening 534a.

The third limiting structure 5334 and the fourth limiting structure 5335 may be disposed in the accommodation cavity 534 to limit the temperature sensor 52 located in the accommodation cavity 534, so as to prevent the temperature sensor 52 from falling off. For example, the third limiting structure 5334 is disposed opposite to the fourth limiting structure 5335. For example, the third limiting structure 5334 and the fourth limiting structure 5335 may be respectively located on the bottom surface 533a and the top surface 533c that are opposite to each other. There is a gap between the third limiting structure 5334 and the fourth limiting structure 5335, to avoid the temperature sensor 52, so that the temperature sensor 52 can be inserted into the accommodation cavity 534 from the first cavity opening 534a.

A first end of the third limiting structure 5334 is connected to the bottom surface 533a, a second end of the third limiting structure 5334 may extend obliquely towards the fourth limiting structure 5335, and an inclined included angle (not equal to 0 degrees or 90 degrees) may be formed between the third limiting structure 5334 and the bottom surface 533a. A first end of the fourth limiting structure 5335 is connected to the top surface 533c, a second end of the fourth limiting structure 5335 may extend obliquely towards the third limiting structure 5334, and an inclined included angle (not equal to 0 degrees or 90 degrees) may be formed between the fourth limiting structure 5335 and the top surface 533c. In this way, the third limiting structure 5334 and the fourth limiting structure 5335 may form a splayed structure. The second end of the third limiting structure 5334 and the second end of the fourth limiting structure 5335 form an opening with a small diameter. The third limiting structure 5334 and the fourth limiting structure 5335 may deform under external force, and the temperature sensor 52 may be inserted into the accommodation cavity 534 through the first cavity opening 534a and the opening. However, because the diameter of the opening is small, it is difficult for the temperature sensor 52 to fall off from the accommodation cavity 534, so as to limit the temperature sensor 52.

In addition, a distance between the third limiting structure 5334 and the fourth limiting structure 5335 may gradually decrease in an insertion direction of the temperature sensor 52 (a direction of an arrow in the figure), and the third limiting structure 5334 and the fourth limiting structure can further play a guiding role. This facilitates insertion of the temperature sensor 52 into the accommodation cavity 534.

Certainly, in some other examples, as shown in FIG. 37, the third limiting structure 5334 and the fourth limiting structure may alternatively be located outside the accommodation cavity 534, and can also limit the temperature sensor 52 to prevent the temperature sensor 52 from falling off. As shown in FIG. 38, the third limiting structure 5334 and the fourth limiting structure may alternatively be respectively located on the bottom surface 533a and the top surface 533c that are opposite to each other. The first end of the third limiting structure 5334 is connected to the bottom surface 533a, and the second end of the third limiting structure 5334 extends obliquely towards the fourth limiting structure 5335. The first end of the fourth limiting structure 5335 is connected to the top surface 533c, the second end of the fourth limiting structure 5335 tilts towards the third limiting structure 5334, and the second end of the third limiting structure 5334 and the second end of the fourth limiting structure 5335 can also form an opening with a small diameter, to limit the temperature sensor 52 and improve disposition stability of the temperature sensor 52 in the accommodation cavity 534.

The opening with the small diameter is located at an end that is of the third limiting structure 5334 and that is away from the accommodation cavity 534, and an end that is of the fourth limiting structure 5335 and that is away from the accommodation cavity 534, to facilitate insertion of the temperature sensor 52 into the accommodation cavity 534 through the opening. As shown in FIG. 38, the thermally conductive member 533 may further include a second guide structure 5336 and a third guide structure 5337 that are disposed opposite to each other. The second guide structure 5336 and the third guide structure 5337 may be respectively disposed on the third limiting structure 5334 and the fourth limiting structure 5335.

A first end of the second guide structure 5336 may be disposed on the second end of the third limiting structure 5334, a second end of the second guide structure 5336 may extend obliquely towards the third guide structure 5337, and an inclined included angle (not equal to 0 degrees or 90 degrees) may be formed between the second guide structure 5336 and the bottom surface 533a. A first end of the third guide structure 5337 may be disposed on the second end of the fourth limiting structure 5335, a second end of the third guide structure 5337 may extend obliquely towards the second guide structure 5336, and an inclined included angle (not equal to 0 degrees or 90 degrees) may be formed between the second guide structure 5336 and the top surface 533c. In this way, the second guide structure 5336 and the third guide structure 5337 may also form a splayed structure. In an insertion direction of the temperature sensor 52, a distance between the second guide structure 5336 and the third guide structure 5337 may gradually decrease, to guide insertion of the temperature sensor 52, and facilitate insertion of the temperature sensor 52 into the accommodation cavity 534 through the opening.

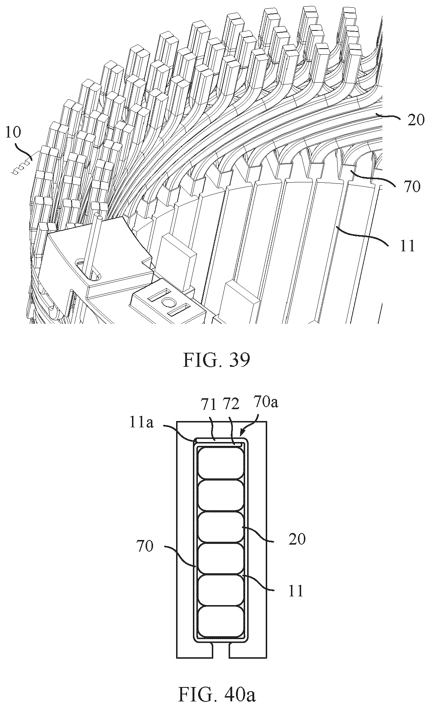

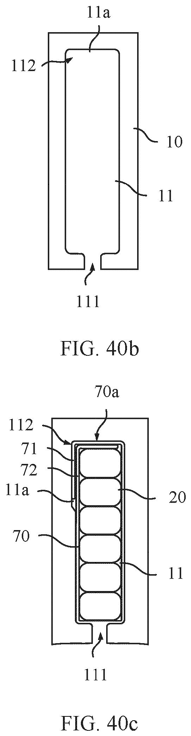

FIG. 39 is an enlarged view of a partial structure of part C in FIG. 10. FIG. 40a is a cross-sectional diagram of assembly of the stator groove and an insulation part in the motor according to an embodiment of this application. FIG. 40b is a cross-sectional diagram of the stator groove in the motor according to an embodiment of this application.

In this embodiment of this application, the winding structure 20 is disposed in the stator groove 11. Refer to FIG. 39. The insulation part 70 is disposed between the winding structure 20 and an inner wall of the stator groove 11. As shown in FIG. 40a, the insulation part 70 may be disposed around a circumferential side wall of the stator groove 11, and the insulation part 70 wraps a coil of the winding structure 20 located in the stator groove 11. The insulation part 70 may be insulation paper, and isolate and insulate the winding structure 20 from the stator core 10, to ensure performance of the motor.

Refer to FIG. 40a. The insulation part 70 may include a head end 71 and a tail end 72. The head end 71 and the tail end 72 are two ends of the insulation part 70 in an encircling direction. The head end 71 and the tail end 72 may at least partially overlap to form a lap structure 70a. This helps increase an electrical clearance and a creepage distance between the winding structure 20 and the stator core 10, and improve insulation safety of the motor.

The head end 71 of the insulation part 70 may be located on an inner side (a side facing a groove opening 111) of the tail end 72 to form the lap structure 70a, or the tail end 72 may be located on an inner side of the head end 71 to form the lap structure 70a.

Refer to FIG. 40b. Expansion space 11a may be formed in the stator groove 11. As shown in FIG. 40a, the lap structure 70a may be accommodated in the expansion space 11a, in other words, the expansion space 11a is correspondingly added in the stator groove 11 to accommodate the lap structure 70a, and the lap structure 70a with a large size and large thickness can be accommodated. This helps increase an overlapping area between the head end 71 and the tail end 72 of the insulation part 70, and further improves insulation safety of the motor, to meet the insulation safety requirement of the high-voltage motor.

The stator groove 11 may include the groove opening 111, a groove bottom 112, and the circumferential side wall located between the groove opening 111 and the groove bottom 112. The groove opening 111 is disposed facing the axis of the stator core 10. As shown in FIG. 40b, the expansion space 11a may be recessed at the groove bottom 112 of the stator groove 11, so that the lap structure 70a is located on an inner side of the groove bottom 112.

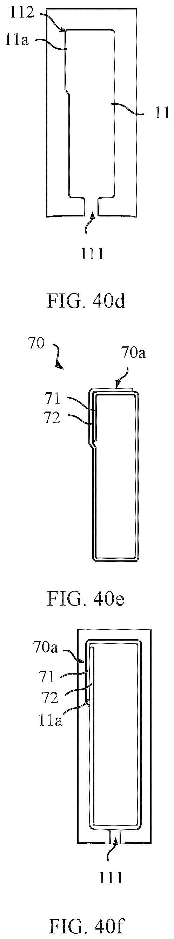

FIG. 40c is another cross-sectional diagram of assembly of the stator groove and the insulation part in the motor according to an embodiment of this application. FIG. 40d is a cross-sectional diagram of the stator groove in the motor according to an embodiment of this application. FIG. 40e is still another cross-sectional diagram of the insulation part in the stator groove in the motor according to an embodiment of this application. FIG. 40f is yet another cross-sectional diagram of assembly of the stator groove and the insulation part in the motor according to an embodiment of this application.

Certainly, in some other examples, the expansion space 11a may alternatively be formed at any position of the stator groove 11. For example, as shown in FIG. 40c and FIG. 40d, the expansion space 11a may be partially formed at the groove bottom 112 and partially formed at the circumferential side wall. For example, the expansion space 11a may be recessed at the groove bottom 112 and the side wall of the stator groove 11, so that the lap structure 70a is partially located on the inner side of the groove bottom 112 and partially located on the inner side of the circumferential side wall. In the lap structure 70a, the head end 71 of the insulation part 70 may be located on the inner side of the tail end 72 as shown in FIG. 40c, or the tail end 72 of the insulation part 70 may be located on the inner side of the head end 71 as shown in FIG. 40e.

Alternatively, as shown in FIG. 40f, the expansion space 11a may be formed on the circumferential side wall of the stator groove 11. For example, the expansion space 11a is recessed on the side wall, so that the lap structure 70a is located on the inner side of the side wall.

An embodiment of this application further provides a powertrain. The powertrain may be used in an electric vehicle/electric automobile (EV), a pure electric vehicle (PEV/BEV), a hybrid electric vehicle (HEV), a range extended electric vehicle (REEV), a plug-in hybrid electric vehicle (PHEV), or a new energy vehicle (New Energy Vehicle), or may be used in battery management (Battery Management), a motor & driver (Motor & Driver), a power converter (Power Converter), or another device.

The powertrain includes at least a deceleration mechanism and any one of the foregoing motors. The motor may be connected to the deceleration mechanism by using a rotating shaft, or the deceleration mechanism may integrate a deceleration motor with the motor for use.

The powertrain may further include a control unit, and the control unit is electrically connected to a terminal on the motor, to control the motor.

It should be understood that the powertrain may further include another mechanical part, for example, may further include a clutch, a heat exchanger, and a filter.

An embodiment of this application further provides a vehicle. The vehicle may be an electric vehicle/electric automobile (EV), a pure electric vehicle (PEV/BEV), a hybrid electric vehicle (HEV), a range extended electric vehicle (REEV), a plug-in hybrid electric vehicle (PHEV), a new energy vehicle (New Energy Vehicle), or the like.

The vehicle includes at least a vehicle body and any one of the foregoing motors, and the motor is disposed on the vehicle body. The vehicle body may be a vehicle frame, or the vehicle body may include a vehicle frame, a vehicle cover disposed on the vehicle frame, and the like.

The vehicle may further include a wheel and a transmission component. The motor may be connected to the transmission component, the transmission component is connected to the wheel, and output power of the motor is transferred to the wheel by using the transmission component, so that the wheel rotates. The motor may be connected to the deceleration mechanism, and the deceleration mechanism is connected to the transmission component, to control movement of the wheel.

The vehicle may further include another mechanical part, to complete a function of the vehicle. For example, the vehicle may further include a braking component, a direction operation structure, and the like.

Finally, it should be noted that the foregoing embodiments are merely intended to describe the technical solutions of embodiments of this application, and are not intended to limit embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A motor, comprising a stator core and a multiphase winding structure wound around the stator core, wherein each phase of the winding structure comprises a first lead-out end, and the first lead-out end of each phase of the winding structure is connected to a lead-out wire of the same phase of the winding structure;
further comprising a first injection molding structure, wherein the first injection molding structure comprises a first injection molding part and a plurality of first busbars, each first busbar comprises a first main body part and a first electrical connector, the first injection molding part wraps first main body parts of the plurality of first busbars to fasten the plurality of first busbars, the plurality of first busbars are spaced from each other in a circumferential direction of the winding structure, and the first electrical connector of each first busbar is electrically connected to the first lead-out end of each phase of the winding structure; and
further comprising an insulation cover, wherein the insulation cover is disposed on the first injection molding structure, and the insulation cover covers the first electrical connector and the first lead-out end.

2. The motor according to claim 1, wherein each phase of the winding structure further comprises a second lead-out end, and the second lead-out end of each phase of the winding structure is connected to a neutral wire of the same phase of the winding structure; and
the motor further comprises a second busbar, wherein the second busbar comprises a plurality of connection end portions, the plurality of connection end portions are spaced from each other in the circumferential direction of the winding structure, a second electrical connector is disposed on each connection end portion, the second electrical connector on each connection end portion is correspondingly connected to the second lead-out end of each phase of the winding structure, and the insulation cover covers the second electrical connector and the second lead-out end.

3. The motor according to claim 2, wherein the insulation cover comprises a top plate and a side plate, the top plate is located on a side that is of the first injection molding structure and that is away from the stator core, and the side plate is located on a side that is of the first injection molding structure and that is away from an axis of the stator core; and
the side plate is connected to the top plate, the side plate and the top plate enclose accommodation space, and the first electrical connector, the first lead-out end, the second electrical connector, and the second lead-out end are located in the accommodation space.

4. The motor according to claim 3, wherein one end of the multiphase winding structure in an axial direction is a connection end, and the first lead-out end and the second lead-out end are located on an outer side of the connection end in the axial direction;
the first injection molding structure is located on the outer side of the connection end in the axial direction, the second busbar is located on an outer circumferential side of the connection end, and the first electrical connector, the first lead-out end, the second electrical connector, and the second lead-out end are distributed in the circumferential direction; and
the second lead-out end of each phase of the winding structure and the second electrical connector correspondingly connected to the second lead-out end are disposed adjacent to a first lead-out end of the same phase of the winding structure and the first electrical connector correspondingly connected to the first lead-out end.

5. The motor according to claim 4, wherein a surface that is of the top plate and that faces the first injection molding part is provided with a plurality of isolation grooves; and
the first lead-out end and the second lead-out end of a same phase of the winding structure, and the first electrical connector and the second electrical connector that are correspondingly connected to the first lead-out end and the second lead-out end respectively are located in one of the isolation grooves.

6. The motor according to claim 5, wherein a baffle is disposed in the isolation groove, the baffle divides the isolation groove into a first partition groove and a second partition groove, the first lead-out end and the first electrical connector are located in the first partition groove, and the second lead-out end and the second electrical connector are located in the second partition groove.

7. The motor according to any one of claims 3 to 6, wherein the insulation cover further comprises end plates, the end plates are located on two sides of the top plate and the side plate in the circumferential direction, and the end plate is separately connected to the top plate and the side plate.

8. The motor according to any one of claims 3 to 6, wherein the top plate is detachably connected to the first injection molding part.

9. The motor according to claim 8, wherein a first clamping structure is disposed on the top plate, a second clamping structure is disposed on the first injection molding part, and the top plate is connected to the first injection molding part through matching between the first clamping structure and the second clamping structure.

10. The motor according to claim 9, wherein a protruding first clamping wall and a protruding second clamping wall are disposed on the surface that is of the top plate and that faces the first injection molding part, there is an avoidance gap between the first clamping wall and the second clamping wall, and protrusions are disposed on two opposite side surfaces of the first clamping wall and the second clamping wall to form the first clamping structure; and
a protruding clamping part is disposed on an outer circumferential side of the first injection molding part, and two opposite side surfaces of the clamping part are provided with grooves to form the second clamping structure.

11. The motor according to claim 10, wherein the first clamping structure is separately located at one end that is of the first clamping wall and that is away from the top plate, and one end that is of the second clamping wall and that is away from the top plate; and
the second clamping structure is located at one end that is of the clamping part and that is away from the top plate, and the clamping part is located in the avoidance gap.

12. The motor according to claim 11, wherein guide slopes are also disposed on the two opposite side surfaces of the clamping part; and
the guide slope is located on a side that is of the second clamping structure and that is away from the stator core, and the two guide slopes tilt in directions opposite to each other from an end that is of the clamping part and that faces the top plate to the end that is of the clamping part and that is away from the top plate.

13. The motor according to any one of claims 2 to 12, further comprising a second injection molding structure, wherein the second injection molding structure comprises a temperature sensor, a second injection molding part, and the second busbar; and
the second busbar further comprises a second main body part, the plurality of the connection end portions are disposed on the second main body part, the temperature sensor is attached to a surface of the second main body part, and the second injection molding part wraps the temperature sensor and the second main body part.

14. The motor according to claim 13, wherein the second busbar comprises a thermally conductive member, the thermally conductive member is disposed on the surface of the second main body part, the thermally conductive member and the surface of the second main body part enclose an accommodation cavity, the temperature sensor is located in the accommodation cavity, and the temperature sensor is attached to at least one surface of the thermally conductive member.

15. The motor according to claim 14, wherein the thermally conductive member comprises a bottom surface and a side surface that are connected; and
the bottom surface is connected to the second main body part, the side surface is opposite to the second main body part, the bottom surface, the side surface, and the surface of the second main body part jointly enclose the accommodation cavity, and the temperature sensor is separately attached to the bottom surface and the side surface.

16. The motor according to claim 14, wherein the thermally conductive member comprises a bottom surface, a side surface, and a top surface that are sequentially connected, the bottom surface is connected to the second main body part, the side surface is opposite to the second main body part, an end that is of the top surface and that is away from the side surface extends towards the second main body part, the bottom surface, the side surface, the top surface, and the surface of the second main body part jointly enclose the accommodation cavity, and the temperature sensor is separately attached to the bottom surface, the side surface, and the top surface.

17. The motor according to any one of claims 1 to 12, wherein the first injection molding structure further comprises a temperature sensor, the temperature sensor is attached to a surface of the first main body part, and the first injection molding part wraps the temperature sensor and the first main body part.

18. The motor according to any one of claims 1 to 12, further comprising a third injection molding structure, wherein the third injection molding structure comprises a temperature sensor, a third injection molding part, and the first lead-out end; and
the temperature sensor is attached to a surface of the first lead-out end, and the third injection molding part wraps the temperature sensor and a part of the first lead-out end.

19. The motor according to any one of claims 1 to 18, wherein the stator core is provided with a plurality of stator grooves, the plurality of stator grooves are spaced from each other in a circumferential direction of the stator core, the winding structure is wound around the stator grooves, and an insulation part is disposed between the winding structure and an inner wall of the stator groove.

20. The motor according to claim 19, wherein the insulation part is disposed around a side wall of the stator groove, and a head end and a tail end of the insulation part at least partially overlap in an encircling direction to form a lap structure; and
the stator groove has expansion space to accommodate the lap structure.

21. A powertrain, comprising a deceleration mechanism and the motor according to any one of claims 1 to 20, wherein the motor is connected to the deceleration mechanism.

22. A vehicle, comprising a vehicle body and the motor according to any one of claims 1 to 20, wherein the motor is disposed on the vehicle body.
